# EUROPEAN PATENT APPLICATION

(11) **EP 4 847 989 A1**
(43) Date of publication of application: **02.12.2026**
(21) Application number: 26181569.0
(22) Date of filing: 28.05.2026
(51) Int. Cl.: G02F 1/015, G02F 1/017, G02F 1/025

(54) **ELECTRO-ABSORPTION MODULATOR STRUCTURE FOR HIGH BANDWIDTH OPERATION**

(30) Priority: 28.05.2025 US 202519220838
(71) Applicant: Mellanox Technologies, Ltd., 2069200 Yokneam (IL)
(72) Inventor: ORON, Moshe, 2069200 Yokneam (IL); KOREN, Uziel, 2069200 Yokneam (IL); STEINBERG, Oren, 2069200 Yokneam (IL); CESTIER, Isabelle, 2069200 Yokneam (IL); MENTOVICH, Elad, 2069200 Yokneam (IL); DE KEULENAER, Timothy, 2069200 Yokneam (IL)
(74) Representative: Mathys & Squire

(57) **Abstract**

According to certain embodiments, a traveling wave electro-absorption modulator (TW-EAM) is provided. The TW-EAM includes a plurality of active segments separated by inactive waveguide segments. Each active section has a ridge structure including an n-type cladding layer disposed on a substrate; an intrinsic core layer disposed on the n-type cladding layer and comprising a core material; a p-type cladding layer disposed on the intrinsic core layer; and a p-type ridge comprising a ridge-cladding layer and a ridge contact layer. The ridge-cladding layer comprises a ridge-cladding material that is characterized by a higher bandgap than the core material. The ridge contact layer comprises a contact material that is characterized by a lower bandgap than the core material. The ridge contact layer has a thickness of at least 0.5 micron.

## Description

### BACKGROUND

Conventional electro-absorption modulators (EAMs) with dynamic extinction ratio (ER) slopes of greater than 5 dB/V, for modulating optical signals in present generation optical links have bandwidth of about 60 GHz. As communication demands continue to increase, the transmitted data rate, which is dictated by EAM bandwidth, of conventional EAMs is expected to be not sufficient for future generation optical links. Accordingly, a need exists for EAMs capable of operating at higher bandwidth.

### GENERAL DESCRIPTION

The invention is defined by the claims. In order to illustrate the invention, aspects and embodiments which may or may not fall within the scope of the claims are described herein.

Datacenters rely on a fast and robust communication infrastructure. This is achieved by using optical interconnects. As data processing requests of datacenters continues to increase, so does the desired bit rate for optical interconnects used to communicate between various components of a datacenter. In some optical links, an electro-absorption modulator (EAM) may be used to modulate an optical signal to encode digital data onto the optical signal. In an EAM, light passes through a waveguide and is modulated by applying voltage to an electrode, causing absorption through the quantum confined Stark effect. Conventional electro-absorption modulators (EAMs) with dynamic extinction ratio (ER) slopes greater than 5 dB/V, for modulating optical signals in present generation optical links have bandwidth of about 60 GHz. The transmitted data rate or bit rate of an optical link using an EAM to encode a stream of digital data onto an optical signal is dictated by the EAM bandwidth. Thus, to increase the bit rate of such an optical link, it is desired to increase the bandwidth of the EAM. For example, for some next generation devices it is desired to increase the bandwidth of the EAMs beyond 100GHz.

In principle, the bandwidth of an EAM device is inversely proportional to the product of the device capacitance and resistance of the electrical driving circuit which is typically 50 ohms. The modulating section of the EAM device contains an electrical diode which induces optical modulation when reverse bias is applied to the diode contacts. The device capacitance of the EAM device is dominated by this diode capacitance, which in turn is proportional to the diode length. Therefore, bandwidth increase is apriori obtainable by diode length reduction. However, simply reducing the diode length does not linearly increase the bandwidth in short diode EAMs, designed for high bandwidth, due to additional factors such as the high contribution of the diode serial resistance to the total circuit resistance as diode length is reduced to a few tens of microns. As a result, bandwidth increase becomes highly sub-linear with length reduction, disabling reach of the 100GHz bandwidth target.

An additional undesired effect of diode length reduction is a proportional decrease in the device extinction ratio (ER). For maintaining EAM ER as device length is reduced, traveling wave EAM (TW-EAM) devices have been designed which include several short active segments that are separated by inactive waveguide segments. The ER measures how much the signal is reduced when voltage is applied. A high extinction ratio is important for effective modulation. In this scheme, sufficiently high ER can be maintained by the accumulated operation of the active segments array. However, due to the sub-linear relationship between segment longitudinal length and bandwidth, in these short-segment TW-EAMs, the high diode serial resistance, which increases as modulator segments are shortened, can still prevent sufficient increase of the TW-EAM bandwidth. Achieving high bandwidth should not come at the cost of a significantly reduced extinction ratio and vice versa, as both parameters are essential for the effective performance of the modulator.

The layer structure of the improved TW-EAM disclosed herein includes a ridge structure comprising (from bottom of the ridge up or from the substrate out): an n-type cladding layer; a core layer; a p-type cladding layer disposed on the core layer; a p-type ridge layer disposed on the p-type cladding; a current spreading and/or contact layer disposed of the p-type ridge layer, wherein the current spreading and/or contact layer has a thickness of at least 0.5 micron. The larger thickness of the contact layer contributes to reduction of device parasitic capacitance, enabling to obtain the high bandwidth. This configuration enables to achieve both high bandwidth and sufficient extinction ratio by using multiple short segments in series. In some embodiments, the modulator comprises multiple 30-micron segments, each capable of achieving high bandwidth. The segments are configured to work together to provide the desired extinction ratio while maintaining high bandwidth.

The layer structure of the TW-EAM includes, from the bottom up, an N type substrate, an N type cladding layer, an undoped core layer including quantum wells, a P type cladding, and an upper P type ridge section. As used herein, the bottom of the TW-EAM is the layer or surface of the TW-EAM closest to the substrate on which the TW-EAM is formed and/or disposed. A conventional P type ridge section is composed from a thick (~2.1 um) InP layer of medium doping (4E17 cm-3) and a thin (0.2 um or less) high doped InGaAs contact layer. The P-InP layer thickness is configured to separate the top contact from the bottom contact and N cladding material so as to control the diode parasitic capacitance of the active segment. Binary InP composition is the common cladding layer material in phosphide EAM devices due to its simplicity in growth and fabrication. Nevertheless, regarding diode serial resistance of the active segment, P-InP has the highest specific resistance in the ridge section, much higher than the n-InP and p-InGaAs layers which causes the ridge section to make a significant contribution to the overall diode serial resistance. The high resistance of this layer limits the performance of the modulator, especially in shorter segments where the p-ridge resistance can exceed 100 ohms.

In various embodiments, the ridge structure of an active segment includes a thin P-InP ridge-cladding layer and a thick InGaAs ridge contact layer. The thickness of the P-InP ridge layer is kept thick enough to prevent undesired absorption of light by the InGaAs contact layer, but thin enough to prevent excess diode serial resistance. As the electrical resistance of InGaAs is less than that of P-InP, this configuration enables to reduce the diode serial resistance to be a few tens of ohms instead of more than hundred ohms expected in the regular short TW-EAM segments required for high bandwidth. An additional measure for serial resistance reduction is to maximize P doping in the upper part of the InP ridge-cladding layer (e.g., to approximately saturation). Additionally, the load resistance of the TW-EAM may be modified (i.e., somewhat reduced) to further optimize performance of the TW-EAM with minimal penalty on the ER performance.

Optical interconnects tend to include transceivers that are in optical communication with one another via one or more optical fibers. A transceiver includes one or more optical signal generating components (e.g., lasers, laser line sources, and/or the like) and/or one or more optical signal detecting components (e.g., one or more photodetectors). For example, a transceiver may include one or more semiconductor devices (e.g., semiconductor lasers) and one or more EAMs together configured to generate optical signals having digital data encoded thereon and/or one or more semiconductor devices (e.g., photodiodes) configured for detecting optical signals and extracting digital data therefrom.

Various embodiments provide traveling wave electro-absorption modulators (TW-EAMs) that include a plurality of active segments separated by passive and/or inactive waveguide segments. As used herein, an active segment is a section of the modulator that actively modulates the optical signal passing therethrough. For example, an active segment is configured to absorb optical signals passing therethrough in accordance with an electrical field applied across the active segment (e.g., via application of an electrical signal to an active segment contact of the active segment. A passive and/or inactive waveguide segment is a waveguide that guides electromagnetic waves and/or optical signals without amplifying or modifying them.

The active segments have a ridge structure. A ridge structure comprises a plurality of layers that have lateral widths that are smaller than the lateral footprint of the TW-EAM on the substrate. The ridge structure includes an n-type cladding layer disposed on a substrate; an intrinsic core layer disposed on the n-type cladding layer and comprising a core material; a p-type cladding layer disposed on the intrinsic core layer; and a p-type ridge. The p-type ridge includes a ridge-cladding layer and a ridge contact layer. The core material comprises a multi-quantum well (MQW) stack. For example, the MQW layer material compositions may include one or more of InGaAsP, InGaAlAs, InGaAs, InAlAs and/or InP. The ridge-cladding layer acts to physically separate an active segment contact disposed on the ridge contact layer from a ground contact of the modulator that is disposed on the substrate. By physically separating the active segment contact from the ground contact, the capacitance of the active segment is reduced and/or controlled. The ridge contact layer is a current spreading layer configured to help distribute current received via the active segment contact over the area of the layer (e.g., in the longitudinal-lateral plane).

The ridge-cladding layer is formed of a ridge-cladding material that is characterized by a higher bandgap than the core material. The ridge contact layer is formed of a contact material that is characterized by a lower bandgap than the core material. The ridge-contact layer has a thickness of at least 0.5 microns. The accumulated thickness of the ridge-cladding and-ridge contact layers enables the diode parasitic capacitance to be maintained at a low value while keeping the diode serial resistance at a reasonably low value (i.e., less than fifty ohms). The low diode parasitic capacitance and low diode serial resistance enables the TW-EAM to be operated at high bandwidth (e.g., at bandwidth greater than 100 GHz). Thus, various embodiments, provide TW-EAMs with improved performance.

Moreover, TW-EAMs of various embodiments are configured for use as optical modulators which may be used for a variety of applications. In some embodiments, the TW-EAMs are configured for encoding digital data onto an optical signal. For example, an TW-EAM may be coupled to a semiconductor laser, included in part of an electro-absorption modulated laser (EML), and/or the like. In certain embodiments, a TW-EAM may be part of a wavelength division multiplexing (WDM) sources and/or incorporated into an optical interconnect. For example, a WDM source may include a plurality of semiconductor lasers and a plurality of TW-EAMs configured to each modulate a respective optical signal generated by a respective semiconductor laser. Dense low-power interfaces are paramount to continue scaling AI/ML systems to interconnect large clusters (GPUs, CPUs, DPUs, ....). Various embodiments provide TW-EAMs that may be incorporated into optical sources to provide optical sources with high bandwidth and with scalability for future generations bit rates.

In certain applications, a TW-EAM may be coupled to an output waveguide (e.g., directly, evanescently, and/or the like). The output waveguide may be used to optically couple the TW-EAM to an optical fiber or to a multiplexer, a photonic integrated circuit (PIC), and/or the like.

In at least one example embodiment, the optical interconnect is part of a datacenter that corresponds to a collection of network devices, such as network switches (e.g., Ethernet switches, IP routers, multiservice platforms, various transmission network elements, legacy communication equipment, or in any other suitable communication system) connected with a collection of servers or compute nodes. A switch fabric serves to transfer the data between the switch ports. A switch fabric comprises one or more interconnect circuits, which may be arranged in various switch fabric architectures, e.g., m*m crossbar, Banyan, Benes, Omega, Clos, multi-plane, STS, TST, shared memory, buffered crossbar, any other suitable blocking or non-blocking architecture, or any applicable mixed architecture thereof. A switch fabric is realized in typical embodiments by hardware, which may comprise Field-Programmable Gate Arrays (FPGAs) and/or Application-Specific Integrated Circuits (ASICs), and in some implementations also bus interconnects. The datacenter may adhere to a networking topology (e.g., a hierarchal networking topology), such as a fat tree topology, a Slim Fly topology, a Dragonfly topology, and/or the like. The datacenter routes traffic amongst the network switches and servers therein, and at least one layer of the topology in the datacenter is coupled to the communication network to allow networking traffic to flow between the datacenter and the network device(s).

The optical interconnect may include a substrate and an electro-optical component (one or more semiconductor lasers, one or more photodiodes, etc.) supported by the substrate and configured to convert electrical signals to optical signals or vice versa. The optical interconnect may further include a transmission block defining a receiving surface configured to receive an optical fiber, and a waveguide configured to transmit optical signals between the electro-optical component and the receiving surface such that in an operational configuration in which the receiving surface receives an optical fiber, the electro-optical component and the optical fiber are in optical communication.

While the present disclosure illustrates and describes the optical interconnect without a housing or other protective casing, as would be understood by one of ordinary skill in the art in light of the present disclosure, some or all of the optical interconnect may be supported or enclosed by any housing used in communications systems to protect the components supported therein (e.g., as part of Quad Small Form-factor Pluggable (QSFP) connectors, Small Form Pluggable (SFP) connectors, or the like). Furthermore, the substrate hosting the electro-optical component may be substantially rectangular shape and/or may be dimensioned (e.g., sized and shaped) for use in any communication system regardless of geometric constraints (e.g., L-shaped, squared-shaped, etc.).

In various embodiments, an optical interconnect for receiving an optical fiber may be implemented in a flip-chip configuration. In certain embodiments, the optical interconnect is configured as a flip-chip component such that a longitudinal axis of the first adiabatic transition profile of the optical interconnect and a longitudinal axis of the second adiabatic transition profile of the optical interconnect may be collinear. Said differently, the orientation of the optical interconnect in such an embodiment does not require a mirror or other reflective surface to redirect optical signals between the electro-optical component and the receiving surface. As would be evident to one of ordinary skill in the art in light of the present disclosure, however, the optical interconnect in a flip-chip configuration may also include one or more mirrors (e.g., reflective surfaces) to accommodate optical fibers received at varying angles. In some optical interconnect embodiments, only mirrors may be operationally configured to redirect light given that at some bending radii, light may remain confined to the waveguide. Accordingly, embodiments of a field replaceable modular optical interconnect unit are described that are configured to be received by a main switch system box. The field replaceable modular optical interconnect unit comprises a housing comprising at least a front panel, a rear panel, and side panels extending between the front and rear panels, a printed circuit board assembly supported within the housing, an optical module supported on the printed circuit board assembly and configured to convert between optical signals and corresponding electrical signals for respectively transmitting or receiving optical signals through a fiber optic cable, a board-to-board connector disposed on the rear panel of the housing and configured to enable electrical signals to be transmitted between the printed circuit board assembly and a main switch system box, and an external connector disposed on the front panel of the housing and configured to engage an external optical fiber for transmitting optical signals between the optical module and an external component. The field replaceable modular optical interconnect unit may be configured to be electrically connected to the main switch system box via engagement of the board-to-board connector with a corresponding connector of the main switch system box when the housing is received by the main switch system box.

In some embodiments, the optical module may be a mid-board optical module (MBOM), and/or the field replaceable modular optical interconnect unit may comprise a plurality of external connectors. For example, the external connector may be a first external connector, and the field replaceable modular optical interconnect unit may further comprise a second external connector disposed on the front panel of the housing and configured to enable transmission of electrical signals between the printed circuit board assembly and an external component connected thereto.

In some embodiments, the disclosed technique provides an electro-optical (EO) interconnect assembly comprising a pair of pluggable EO transceivers connected at respective ends of an optical fiber. The EO transceivers are typically used to connect network-connected devices (e.g., remote client switches, network adapters such as Network Interface controllers (NICs) and Host Channel Adapters (HCAs), Smart-NICs (NICs having embedded CPUs), network-enabled Graphics Processing Units (GPUs), and the like). The terms "network-connected device" and "network device" are used interchangeably herein. In certain embodiments, an optical interconnect includes a substrate, one or more optical waveguides, one or more first micro-lenses, one or more second micro-lenses, and first and second mechanical fixtures.

Various embodiments relate to interconnects (e.g., interconnect topologies) that are scalable and advantageous for networks that require a large number of all-to-all or point-to-point links between one or more node or send/receive pairs. In particular, silicon photonics interconnects or topologies are provided herein that may achieve at least moderate bandwidth between many nodes with physical, optical fiber connections. In some implementations, the one or more node or send/receive pairs are coupled with an optical fiber allowing a single wavelength to pass therebetween. In other implementations, multiple wavelengths or groups of wavelengths may be transmitted or received by nodes while simultaneously passing multiple wavelengths or groups of wavelengths to other nodes via optical fiber loops connecting three or more nodes. In some implementations, such interconnects as described herein do not rely on or include one or more of the following: wavelength synchronization between transmit and receive pairs, arbitration of the fiber(s), demultiplexers on the receiver side, and/or an optical crossbar. In some implementations, the optical interconnects may be sized to fit a face-plate form factor or as a mid-board optical connector or co-packaged optics. In some embodiments, the present disclosure provides optical interconnects for high bandwidth density applications like switches and GPUs or other processing elements. In one example, the processing elements may include central processing units (CPUs), graphics processing units (GPUs), data processing units (DPUs), quantum processing units (QPUs), a plurality of parallel processing units (PPUs), and application-specific integrated circuits (ASICs). QPUs are configured to perform one or more operations associated with a quantum algorithm. In some embodiments, each of the one or more QPUs may include a plurality of qubits and the one or more QPUs may be in communication with each other via a quantum channel. In some embodiments, each of the plurality of qubits may include local qubits, global qubits, and/or synchronization qubits. In some embodiments, the local qubits of each QPU may be configured to perform the one or more operations associated with the quantum algorithm on the QPU that the local qubits are associated with.

A "node" as described herein may refer to a network switch to which a plurality of computer processing units (CPUs), graphical processing units (GPUs), data processing units (DPUs), or memory media are connected in an arbitrary number. The network switch may communicate with other network switches of the same kind to which the same processor and memory units may be connected. However, in other implementations, "node" may also refer to a processor which may be responsible for communication with all other nodes in the network or subnetwork.

An "optical fiber" as described herein can refer to a single optical fiber (e.g., including a core and a cladding) to provide unidirectional optical communication, can refer to a bidirectional pair of optical fibers (e.g., each including a core and a cladding) to provide both transmit and receive communications in an optical network, or can refer to a multicore fiber, such that a single cladding could encapsulate a plurality of single-mode or multimode cores. Optical fibers can extend contiguously and uninterrupted between node or send/receive pairs (e.g., via pass-through connections) or include two or more fibers connected via fiber-to-fiber connections such that the fibers function or perform as a single fiber.

Silicon Photonics (SiP) is a technology that enables optical systems to be manufactured using silicon processes with silicon as the optical medium. Various optical components, such as interconnects and signal processing components, may be fabricated and integrated in a single SiP device. Some SiP devices are fabricated on a silica substrate or over a silica layer on a silicon substrate, a technology that is often referred to as Silicon on Insulator (SOI). In certain optical systems, a SiP device is attached to an external device to facilitate optical communications. However, it is generally difficult to accurately align light signals on the SiP with an external device that receives the light.

In certain optical systems, a SiP device is attached to an external device to facilitate optical communications. For example, the system includes one or more waveguides that carry light signals to and/or from optical chips. Examples of optical chips that can be included on the device include, but are not limited to, one or more components selected from a group consisting of facets through which light signals can enter and/or exit a waveguide, entry/exit ports through which light signals can enter and/or exit a waveguide from above or below the device, multiplexers for combining multiple light signals onto a single waveguide, demultiplexers for separating multiple light signals such that different light signals are received on different waveguides, optical couplers, optical switches, lasers that act as a source of a light signal, amplifiers for amplifying the intensity of a light signal, attenuators for attenuating the intensity of a light signal, modulators for modulating a signal onto a light signal, modulators that convert a light signal to an electrical signal, and vias that provide an optical pathway for a light signal traveling through the device. Additionally, the device can optionally, include electrical components. For instance, the device can include electrical connections for applying a potential or current to a waveguide, controlling active optical components, such as modulators, for example, and/or for controlling other components on the optical device.

According to a first aspect of the present disclosure, a traveling wave electro-absorption modulator (TW-EAM) is provided. In an example embodiment, the TW-EAM includes a plurality of active segments separated by passive waveguide segments. Each of the active segments has a ridge structure that includes an n-type cladding layer disposed on a substrate; an intrinsic core layer disposed on the n-type cladding layer and comprising a core material; a p-type cladding layer disposed on the intrinsic core layer; and a p-type ridge comprising a ridge-cladding layer and a ridge contact layer. The ridge-cladding layer comprises a ridge-cladding material that is characterized by a higher bandgap than the core material. The ridge contact layer comprises a contact material that is characterized by a lower bandgap than the core material. The ridge-contact layer has a thickness of at least 0.5 micron.

In an example embodiment, the intrinsic core layer comprises a multi-quantum well (MQW) stack characterized by a lower bandgap than respective bandgaps that characterize the n-type cladding layer and the p-type cladding layer and the MQW stack is configured to perform optical modulation at least in part via the quantum-confined Stark effect (QCSE).

In an example embodiment, a longitudinal length of each segment of the plurality of active segments is smaller than 40 microns for enabling of a modulation bandwidth of greater than 100GHz.

In an example embodiment, the TW-EAM further includes a plurality of contact segments, each contact segment of the plurality of contact segments in electrical communication with a respective segment of the plurality of active segments via the respective ridge-contact layer; and a transmission line configured to provide modulator driving signals to the plurality of contact segments.

In an example embodiment, a termination resistance of the transmission line is in a range of 30 to 45 ohms.

In an example embodiment, the ridge-cladding layer has a thickness smaller than 1.2 microns.

In an example embodiment, the ridge-cladding layer has a substantially uniformly doped with a p-type dopant and is characterized by a p doping level larger than 4E17 cm⁻³.

In an example embodiment, the ridge-cladding layer has a varying doping profile where the average doping level is larger than 4E17 cm⁻³.

In an example embodiment, the n-type cladding layer, the p-type cladding layer, and the ridge-cladding layer each comprise a respective InP material and the ridge-contact layer comprises a lattice matched InGaAs material.

In an example embodiment, the ridge-cladding layer is characterized by an average p doping level larger than 1E18 cm⁻³ to enable a modulation bandwidth greater than 120GHz.

In an example embodiment, the thickness of the ridge contact layer is in range of 0.5 to 2.5 microns and a thickness of the ridge-cladding layer is in a range of 0.5 to 1.2 microns.

In an example embodiment, the plurality of active segments consists of two to five segments.

According to an example aspect, a TW-EAM is provided. In an example embodiment, a TW-EAM includes a ridge structure that includes a core layer; a p-type cladding layer disposed on the core layer; a p-type ridge layer disposed on the p-type cladding layer; and a ridge contact layer disposed on the p-type ridge layer. The ridge contact layer has a thickness of at least 0.5 micron. The p-type ridge layer may be a ridge-cladding layer, in certain embodiments.

According to another aspect, a transmitter assembly is provided. The transmitter assembly includes an optical signal source optically coupled to a TW-EAM modulator; and the TW-EAM modulator. The TW-EAM modulator includes a plurality of active segments separated by passive waveguide segments. Each of the active segments have a ridge structure including an n-type cladding layer disposed on a substrate; an intrinsic core layer disposed on the n-type cladding layer and comprising a core material; a p-type cladding layer disposed on the intrinsic core layer; a p-type ridge comprising a ridge-cladding layer and a ridge contact layer. The ridge-cladding layer comprises a ridge-cladding material that is characterized by a higher bandgap than the core material. The ridge contact layer comprises a contact material that is characterized by a lower bandgap than the core material. The ridge-contact layer has a thickness of at least 0.5 micron.

In an example embodiment, a longitudinal length of each segment of the plurality of active segments is smaller than 40 microns for enabling of a modulation bandwidth of greater than 100GHz.

In an example embodiment, the transmitter assembly further includes a plurality of contact segments, each contact segment of the plurality of contact segments in electrical communication with a respective segment of the plurality of active segments via the respective ridge-contact layer; and a transmission line configured to provide modulator driving signals to the plurality of contact segments. A termination resistance of the transmission line is in a range of 30 to 45 ohms, in certain embodiments.

In an example embodiment, the ridge-cladding layer has a thickness smaller than 1.2 microns and the ridge-cladding layer has one of a substantially uniform doping profile and is characterized by a p doping level larger than 4E17 cm⁻³, or a varying doping profile where the average doping level is larger than 4E17 cm⁻³.

In an example embodiment, the n-type cladding layer, the p-type cladding layer, and the ridge-cladding layer each comprise a respective InP material and the ridge-contact layer comprises a lattice matched InGaAs material.

In an example embodiment, the thickness of the ridge contact layer is in range of 0.5 to 2.5 microns and a thickness of the ridge-cladding layer is in a range of 0.5 to 1.2 microns.

According to another aspect, an optical interconnect is provided that includes a transmitter assembly of an example embodiment.

According to another aspect, a datacenter is provided that includes an optical interconnect of an example embodiment.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE SEVERAL VIEWS OF THE DRAWINGS

Reference will now be made to the accompanying drawings, which are not necessarily drawn to scale, and wherein:
Figure 1 provides a schematic top view of an example travelling wave electro-absorption modulator (TW-EAM), in accordance with certain embodiments;
Figure 2 provides a plot illustrating simulation results of S21 response versus modulation frequency for active segments of different lengths, in accordance with certain embodiments;
Figure 3 provides a schematic cross-sectional view of an active segment of a TW-EAM taken in a plane that is perpendicular to the longitudinal axis of the TW-EAM, in accordance with certain embodiments;
Figure 4 provides a plot that illustrates two example doping profiles of the ridge cladding layer, in accordance with certain embodiments;
Figure 5 provides a plot of the S21 response as a function of modulation frequency for a conventional TW-EAM and for TW-EAMs of three example embodiments;
Figure 6 provides a plot of the S11 response as a function of modulation frequency for the conventional TW-EAM and for the three TW-EAMs of example embodiments shown in Figure 5;
Figure 7 schematically illustrates a transmitter assembly of an optical interconnect, in accordance with certain embodiments;
Figure 8 provides a block diagram of an optical interconnect including an array of EMLs, according to certain embodiments;
Figure 9 provides a block diagram of an example system that may include one or more optical interconnects including EMLs, according to certain embodiments;
Figure 10 provides a schematic diagram of an example datacenter that may include one or more optical interconnects according to certain embodiments;
Figure 11 provides a block diagram of two example communication devices in communication with one another according to certain embodiments;
Figures 12A and 12B illustrate a top view and a perspective view, respectively, of a transceiver module operatively coupled to a network adapter, in accordance with an embodiment of the disclosure.
Figure 13 depicts some exemplary scenarios for use of an optical transceiver, in accordance with various embodiments;
Figure 14 provides a block diagram that schematically illustrates a computing system that may include one or more optical interconnects of various embodiments;
Figure 15 illustrates an example computing environment, in accordance with at least one embodiment;
Figure 16 illustrates another example computer system that may include optical interconnects, according to at least one embodiment; and
Figure 17 is a block diagram that schematically illustrates a co-packaged Networking Device, in accordance with an embodiment that is disclosed herein.

### DETAILED DESCRIPTION

The present disclosure more fully describes various embodiments with reference to the accompanying drawings. It should be understood that some, but not all embodiments are shown and described herein. Indeed, the embodiments may take many different forms, and accordingly this disclosure should not be construed as limited to the embodiments set forth herein. Rather, these embodiments are provided so that this disclosure will satisfy applicable legal requirements. Like numbers refer to like elements throughout.

Various embodiments provide travelling-wave electro-absorption modulators (TW-EAMs) configured for Gigabit Data Rate (GDR) operation at greater than 60GHz (e.g., greater than 100 GHz in some embodiments and greater than 120 GHz in certain embodiments) enabling the transmission of twice the amount of data, significantly improving the performance of EAM devices.

As data processing requests of datacenters continues to increase, so does the desired bit rate for optical interconnects used to communicate between various components of a datacenter. In some optical links, an electro-absorption modulator (EAM) may be used to modulate an optical signal to encode digital data onto the optical signal. Conventional electro-absorption modulators (EAMs) with dynamic extinction ratio (ER) slopes greater than 5 dB/V, for modulating optical signals in present generation optical links have bandwidth of about 60 GHz. The transmitted data rate or bit rate of an optical link using an EAM to encode a stream of digital data onto an optical signal is dictated by the EAM bandwidth. Thus, to increase the bit rate of such an optical link, it is desired to increase the bandwidth of the EAM. For example, for some next generation devices it is desired to increase the bandwidth of the EAMs beyond 100GHz. As conventional EAMs operate with bandwidths of about 60GHz, technical problems exist regarding how to increase the operational bandwidth of an EAM.

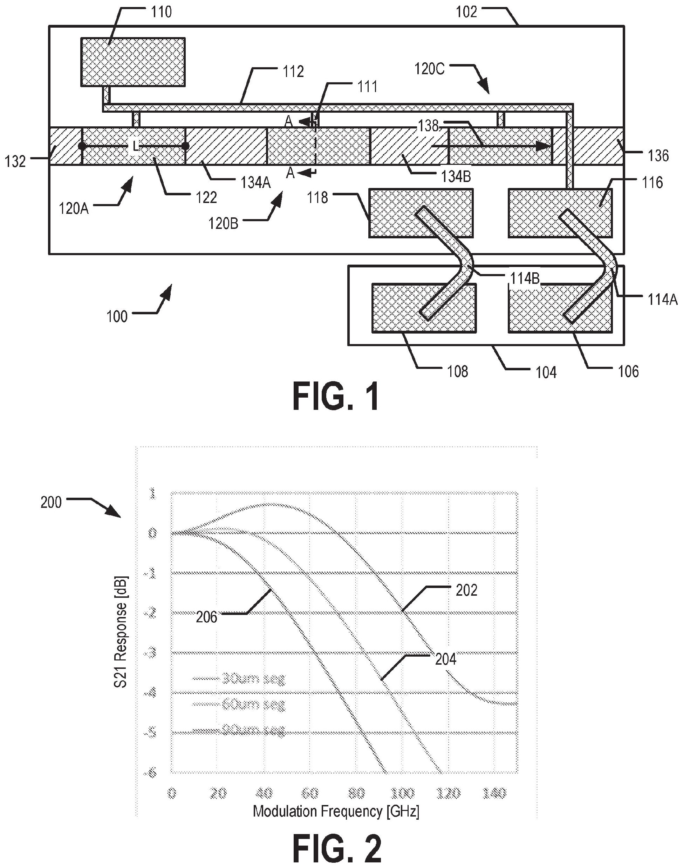

In principle, the bandwidth of an EAM device is inversely proportional to its diode capacitance, which in turn is proportional to the diode length. Therefore, bandwidth increase is apriori obtainable by device length reduction. For example, Figure 2 illustrates a plot 200 of S21 response as a function of modulation frequency for an EAM having a single active segment with a segment longitudinal length of 90 microns (line 206), 60 microns (line 204), and 30 microns (line 202). As shown in Figure 2, reducing the segment longitudinal length of the active segment down to 30 microns enables the EAM to achieve higher bandwidth with an acceptable S21 response (e.g., greater than -3dB).

However, by reducing the active segment longitudinal length from 90 microns to 30 microns results in a reduction of the extinction ratio (ER) of the EAM. Therefore, in order to maintain the EAM ER as the active segment longitudinal length is reduced, traveling wave EAM (TW-EAM) devices have been designed which include several short active segments that are separated by inactive waveguide segments. For example, the TW-EAM 100 illustrated in Figure 1 includes a plurality of active segments 120A, 120B, -120C that are separated by passive or inactive waveguide segments 134A, 134B. However, in these short-segment TW-EAMs, high diode serial resistance, which increases as the active segment longitudinal lengths are shortened, prevents the increase of the TW-EAM bandwidth. Thus, technical problems remain regarding providing EAMs, such as TW-EAMs with operational bandwidths sufficient for next generation bit rate requirements.

Various embodiments provide technical solutions to these technical challenges. The layer structure of a TW-EAM includes, from the bottom (e.g., substrate) up, an N type substrate, an N type cladding layer, an undoped core layer including quantum wells, a P type cladding, and an upper P type ridge section. As used herein, the bottom of the TW-EAM is the layer or surface of the TW-EAM closest to the substrate on which the TW-EAM is formed and/or disposed and the term up refers to moving through the layer structure in a direction away from the substrate. A conventional TW-EAM P type ridge section is composed from a thick (~2.1 um) InP layer of medium doping (~1E17 cm-3) and a thin (0.2 um or less) high doped InGaAs contact layer. The P-InP layer thickness is configured to separate the top contact from the bottom contact and N cladding material so as to control the diode parasitic capacitance of the active segment. Regarding diode serial resistance of the active segment, however, P-InP has the highest specific resistance of the ridge section materials, which causes the P-type ridge-cladding layer to make a significant contribution to the overall diode serial resistance.

In various embodiments, the P-type ridge of an active segment includes a thin ridge-cladding layer comprising a ridge-cladding material that is characterized by a higher bandgap than a core material of the intrinsic core layer of the TW-EAM. The P-type ridge further includes a ridge contact layer. In contrast to common EAM designs which employ a thin contact layer (e.g., ~0.2 micron ), a thick (e.g., no less than 0.5 micron) ridge contact layer that comprises a contact material characterized by a lower bandgap than the core material is provided in TW-EAMs of various embodiments. The (InP) ridge-cladding layer is sufficiently thick to prevent undesired absorption of light by the (InGaAs) ridge contact layer, but thin enough to prevent excess serial resistance. As the electrical resistance of the contact material is less than that of the ridge-cladding material, this configuration reduces the diode serial resistance to be a few tens of ohms instead of the more than a hundred ohms expected in the conventional short TW-EAM segments. At the same time, the accumulated thickness of the (thicker) ridge contact layer and the (thinner) p-cladding layer stays sufficiently large to prevent excess parasitic capacitance between the top and bottom regions of the diode. In some embodiments, to further decrease the diode serial resistance of the active segments, the P doping in the upper part of the ridge-cladding layer may be maximized (e.g., to approximately saturation). Additionally, the load resistance of the TW-EAM may be adjusted/modified (i.e., somewhat reduced) to further optimize performance of the TW-EAM with minimal penalty on the ER performance.

Therefore, various embodiments provide improvements to the field of EAMs, and TW-EAMs specifically, and other related fields (e.g., optical communications, optical links, datacenters, and/or the like), by providing TW-EAMs configured for operation at high bandwidth.

### Example Traveling Wave Electro-Absorption Modulators (TW-EAMs)

Figure 1 illustrates a schematic top view of an example TW-EAM 100, according to certain embodiments. In various embodiments, a TW-EAM 100 includes a plurality or sequence of active segments 120 (e.g., 120A, 120B, 120C) that are separated by passive and/or inactive waveguide segments 134 (e.g., 134A, 134B). The TW-EAM 100 also includes an input waveguide 132 configured to provide an optical signal to a first active segment 120A. The TW-EAM 100 may further include an output waveguide 136 configured to provide an optical signal modulated by the plurality of active segments 120 to a downstream component (e.g., a modulator, an optical fiber, and/or the like). For example, an optical signal may propagate through the TW-EAM in propagation direction 138.

Each active segment 120 is characterized by a segment longitudinal length L. In various embodiments, the segment longitudinal length L is no more than forty microns. For example, the segment longitudinal length L may be in a range of ten to forty microns (e.g., approximately thirty microns). The TW-EAM 100 includes a plurality of active segments 120. For example, the TW-EAM may include two to five active segments, or possibly up to ten active segments, in certain embodiments. The illustrated embodiment includes three active segments.

Each active segment 120 includes a respective active segment contact 122 comprising a conductive material (e.g., a metal such as gold, copper, and/or the like). The action of the active segment 120 (e.g., whether the active segment 120 absorbs the optical signal or not) is controlled by application of an electrical signal to the active segment contact 122. The TW-EAM includes a contact pad 110 to which a modulator driver may be electrically coupled (e.g., via bump bonding, wire bonding, and/or the like). A transmission line 112 extends parallel to the longitudinal axis of the TW-EAM (which is parallel to the propagation direction 138). Each active segment contact 122 is in electrical communication with the transmission line 112 via a respective segment lead/trace 111.

The transmission line 112 terminates at a transmission line terminal pad 116. In various embodiments, the transmission line terminal pad 116 is in electrical communication with a termination chip 104 via a wire bonding 114A between the transmission line terminal pad 116 and a termination pad 106 of the termination chip 104. For example, the termination chip 104 may include and/or be configured to act as a load resistor. In various embodiments, the termination resistance of the transmission line (e.g., the resistance between the transmission line terminal pad 116 and ground) is less than 50 ohms. For example, the termination resistance of the transmission line may be less than 45 ohms. In certain embodiments, the termination resistance of the transmission line is in a range of 45 to 30 ohms (e.g., approximately 40 ohms).

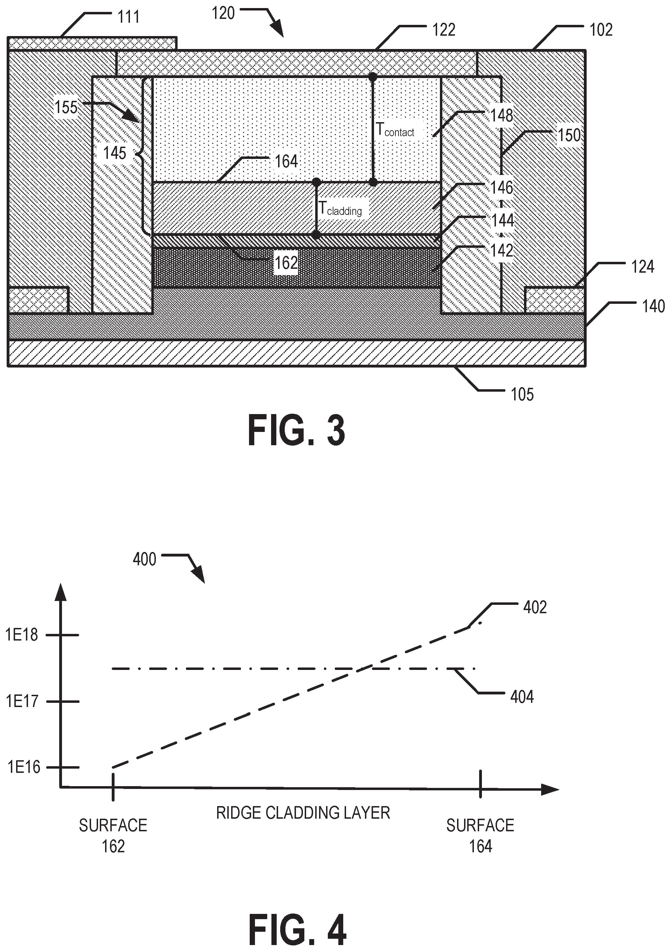

In various embodiments, ground contacts 124 (see Figure 3) of the TW-EAM may be in electrical communication with the termination chip via wire bonding 114B between a ground contact pad 118 of the TW-EAM 100 and a corresponding ground pad 108 of the termination chip 104.

Figure 3 illustrates a cross-sectional view of an active segment 120 of the TW-EAM 100. The cross-section shown in Figure 3 is taken at line A-A such that the plane of the cross-section is perpendicular to the longitudinal axis of the TW-EAM 100 (and perpendicular to the propagation direction 138 of the TW-EAM).

In various embodiments, the TW-EAM 100 comprises an N type substrate 105. In certain embodiments, the N type substrate 105 comprises N⁺-InP and/or InP heavily doped with an N type dopant. The TW-EAM further includes a ridge structure 155 formed on the N type substrate 105. For example, the TW-EAM 100 further includes an N type cladding layer 140. In various embodiments, the N type cladding layer 140 comprises N-InP and/or InP doped with an N type dopant.

The TW-EAM 100 further includes an intrinsic or undoped core layer 142. In various embodiments, the intrinsic core layer 142 includes a multi-quantum well (MQW) stack. The MQW stack is characterized by a core bandgap. In various embodiments, the core bandgap is lower than a bandgap that characterizes the N type cladding layer 140 and also lower than a bandgap that characterizes the P type cladding layer 144. In various embodiments, the MQW stack is configured to perform optical modulation at least in part via the quantum-confined Stark effect (QCSE).

The TW-EAM 100 further includes a P type cladding layer 144. The P type cladding layer 144 includes P-InP, in certain embodiments. In various embodiments, the P type cladding layer 144 is a low or lightly doped layer. For example, the dopant density of the P type cladding layer 144 is approximately 10¹⁵ cm⁻³, in some embodiments.

In various embodiments, the TW-EAM 100 further includes a P type ridge 145. The P type ridge 145 includes a ridge-cladding layer 146 and a ridge contact layer 148. For example, the ridge-cladding layer 146 may be a p-type ridge layer. In various embodiments, the ridge-cladding layer comprises a ridge-cladding material that is characterized by a higher bandgap than the core bandgap that characterizes the core material of the intrinsic core layer142 of the TW-EAM 100. The ridge contact layer 148 comprises a contact material that is characterized by a lower bandgap than the core bandgap that characterizes the core material of the intrinsic core layer142 of the TW-EAM 100. For example, the contact material may have lower resistance than the ridge-cladding material. The ridge contact layer 148 is in electrical communication with the active segment contact 122.

In various embodiments, the ridge contact layer is characterized by a contact thickness T_{contact} and the ridge-cladding layer is characterized by a cladding thickness T_{cladding}. The contact thickness and the cladding thickness are measured in a direction that is normal to the surfaces 162, 164 of the ridge-cladding layer 146. In various embodiments, the contact thickness T_{contact} is at least 0.5 microns. In some embodiments, the contact thickness T_{contact} is up to 2.5 microns. In various embodiments, the cladding thickness T_{cladding} is no more than 1.2 microns. The cladding thickness T_{cladding} is configured such that the ridge-cladding layer 146 is sufficiently thick enough to prevent undesired absorption of light by the ridge contact layer 148. The cladding thickness T_{cladding} is further configured such that the ridge-cladding layer 146 is thin enough to prevent excess serial resistance of the active segment 120.. For example, the cladding thickness T_{cladding} is in a range of 0.5 to 1.2 microns, in certain embodiments. In various embodiments, the total thickness of the P type ridge 145 (e.g., the sum of the contact thickness T_{contact} and the cladding thickness T_{cladding}) is in a range of 2.5 to 3.5 microns, so as to maintain a low parasitic capacitance of the active segment 120.

In certain embodiments, the N type cladding layer 140, the P type cladding layer 144, and the ridge-cladding layer 146 each comprise a respective InP material and the ridge contact layer 148 comprises a lattice-matched InGaAs material. For example, the ridge-cladding material may be InP doped with a P type dopant and the contact material may be a lattice-matched p type InGaAs material.

Figure 4 provides a plot 400 illustrating some example doping profiles of the ridge-cladding layer 146 from a first surface 162 which is directly adjacent to and/or interfaces with the P type cladding layer 144 to the second surface 164 which is directly adjacent to and/or interfaces with the ridge contact layer 148. In some embodiments, the ridge-cladding layer 146 is substantially uniformly doped as shown by line 404. For example, the ridge-cladding layer 146 may be substantially uniformly doped with a p-type dopant the p doping level or density of the ridge-cladding layer is larger than 4x10¹⁷ cm⁻³. In some embodiments the ridge-cladding layer 146 has a varying doping profile where the average doping level is larger than 4x10¹⁷ cm⁻³. For example, as shown by line 402, the P type dopant density of the ridge-cladding layer 146 may increase from approximately 1x10¹⁶ cm⁻³ at the first surface 162 to approximately 2x10¹⁸ cm⁻³ at the second surface 164. For example, at the second surface 164, the ridge-cladding layer 146 may be doped to saturation, in certain embodiments. In some embodiments, the increase in dopant density across the ridge-cladding layer 146 (e.g., from the first surface 162 to the second surface 164) may be linear. However, various other monotonically increasing doping profiles may be used in various embodiments.

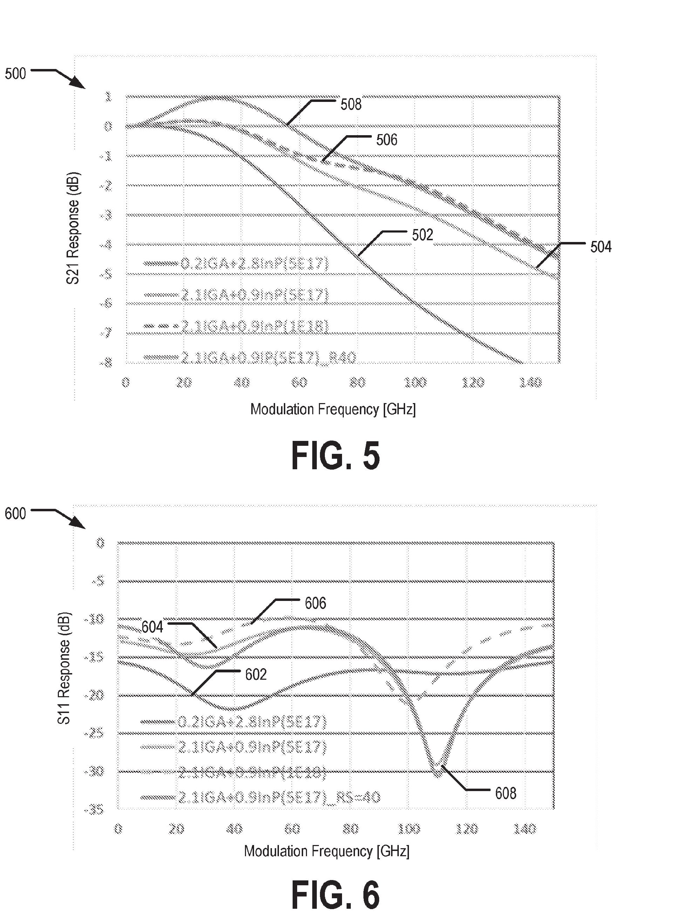

Figure 5 provides a plot 500 illustrating simulation results for the S21 response as a function of modulation frequency for a conventional TW-EAM (shown as line 502) and for three different TW-EAMs of example embodiments (shown as lines 504, 506, and 508). The S21 response for a TW-EAM represents the forward transmission coefficient of the TW-EAM. Figure 6 provides a plot 600 illustrating simulation results for the S11 response as a function of modulation frequency for the conventional TW-EAM (shown as line 602) and for the three TW-EAMs of example embodiments (shown as lines 604, 606, and 608). The S11 response for a TW-EAM represents the reflection coefficient or return loss of the TW-EAM.

The conventional TW-EAM, having responses illustrated by lines 502 and 602, has a thin ridge-contact layer (0.2 microns thick) and a thick ridge-cladding layer (e.g., 2.8 microns thick) with a P type dopant with a dopant density of 5x10¹⁷ cm⁻³. A first example TW-EAM 100, having responses illustrated by lines 504 and 604, has a thick ridge contact layer (2.1 microns thick) and a thin ridge-cladding layer (e.g., 0.9 microns thick) and the ridge-cladding layer has a substantially uniform P type dopant density of 5x10¹⁷ cm⁻³. A second example TW-EAM 100, having responses illustrated by lines 506 and 606, has a thick ridge contact layer (2.1 microns thick) and a thin ridge-cladding layer (e.g., 0.9 microns thick) and the ridge-cladding layer has a substantially uniform P type dopant density of 1x10¹⁸ cm⁻³. A third example TW-EAM 100, having responses illustrated by lines 508 and 608, has a thick ridge contact layer (2.1 microns thick) and a thin ridge-cladding layer (e.g., 0.9 microns thick) and the ridge-cladding layer has a substantially uniform P type dopant density of 5x10¹⁷ cm⁻³ and the termination resistance of the transmission line has been reduced from the conventional 50 ohms to 40 ohms.

As can be seen from Figures 5 and 6, a conventional TW-EAM is not capable of operating at a bandwidth of greater than 100 GHz, as the S21 (e.g., corresponding to the forward transmission coefficient) is less than -3dB at frequencies greater than 100 GHz. In contrast, each of the three TW-EAMs 100 of example embodiments have S21 responses at 100 GHz that are greater than -3dB, indicating these devices are capable of functioning at a bandwidth of 100 GHz. Notably, the second example TW-EAM (having an increased dopant density) and the third example TW-EAM (having a reduced termination resistance of the transmission line) have S21 responses that are equal to or greater than -3dB up to modulation frequencies of 120 GHz, indicating that these TW-EAMs are capable of operating at bandwidths greater than 120 GHz.

In various embodiments, a TW-EAM is fabricated by epitaxially growing the layers of the active segments 120 on the N type substrate 105. The ridge structure may then be formed using a direct or masked etching process. Semi Insulating (SI) InP sidewalls 150 may be patterned along the lateral sides of the ridge structure. The active segment contacts 122 and ground contacts 124 may be deposited and patterned. An insulator 102, such as benzocyclobutene (BCB), may be deposited to encapsulate the TW-EAM. The transmission line 112, respective segment leads/traces 111, contact pad 110, transmission line terminal pad 116, and ground contact pad 118 may be deposited and patterned on the surface provided by the insulator 102. The TW-EAM 100 may be packaged such that the transmission line terminal pad 116 is in electrical communication with a termination chip 104 such that the terminal resistance of the transmission line is a selected resistance, the ground contact pad 118 is in electrical communication with a termination chip, the contact pad 110 is in electrical communication with a modulator driver, the input waveguide 132 is in optical communication with an optical source (e.g., a laser and/or the like), and the output waveguide 136 is in optical communication with a downstream component (e.g., multiplexer, optical fiber, and/or the like).

### Example Transmitter Assembly including one or more TW-EAMs

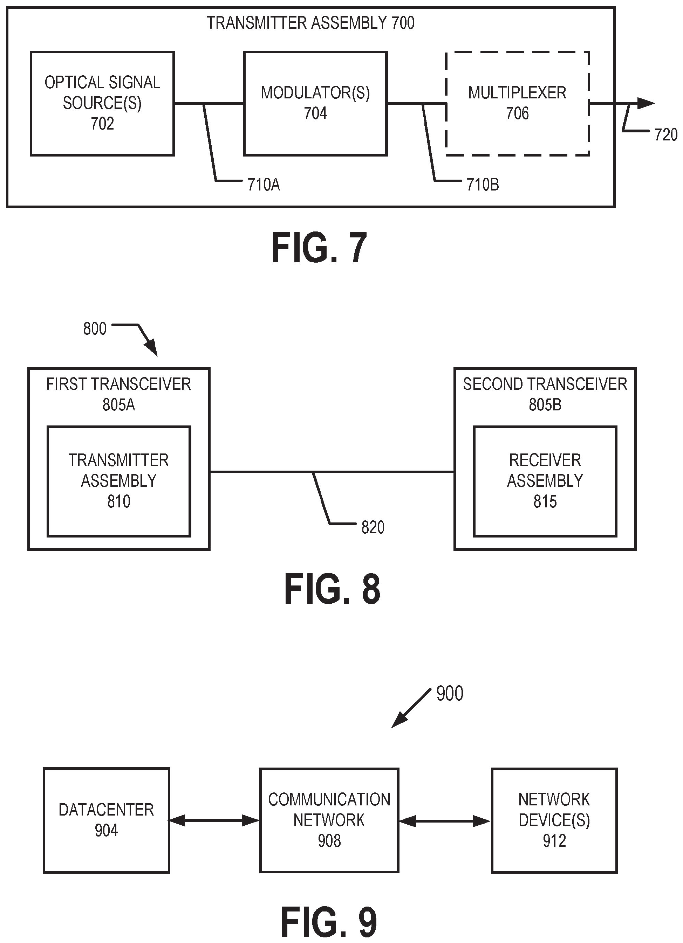

In various embodiments, a TW-EAM 100 may be incorporated into a transmitter assembly. Figure 7 schematically illustrates an example transmitter assembly 700. In various embodiments, the transmitter assembly 700 includes one or more optical signal sources 702. For example, the one or more optical signal sources 702 may comprise a frequency comb laser, an array of semiconductor lasers, configured to generate optical signals (e.g., laser beams and/or pulses).

The transmitter assembly 700 may further include one or modulators 704 each configured to modulate a respective optical signal. For example, a waveguide 710A may be or be optically coupled to the input waveguide 132 of the TW-EAM 100 for providing an optical signal generated by an optical signal source 702 to the TW-EAM 100 for modulation. The TW-EAM 100 may modulate the respective optical signal in accordance with a control signal provided thereto (e.g., via the contact pad 110, the transmission line 112, and the respective segment leads/traces 111) that was generated by a corresponding modulator driver.

The output waveguide 136 may be or may be optically coupled to waveguide 710B configured to provide the modulated optical signal to a downstream component such as a multiplexer 706 and/or an optical fiber 720. For example, in some embodiments, the modulated optical signal may be multiplexed (e.g., by the multiplexer 706) with other modulated optical signals (e.g., via a wavelength divisional multiplexing (WDM) scheme). The modulated optical signal is provided and/or transmitted via the optical fiber 720 for receipt by a receiver assembly of the optical interconnect or link that includes the transmitter assembly 700.

### Example Optical Interconnect Including TW-EAMs

Figure 8 illustrates an example optical interconnect 800 including one or more TW-EAMs 100 of various embodiments. For example, an optical interconnect 800 may include a transmitter assembly 810 that may include one or more TW-EAMs 100.

The optical interconnect 800 comprises a first transceiver 805A and a second transceiver 805B. The first transceiver 805A is in optical communication with the second transceiver 805B via one or more optical fibers 820. The first transceiver 805A comprises transmitter assembly 810 that may include one or more TW-EAMs 100. For example, the transmitter assembly 810 may be a transmitter assembly 700. In various embodiments, the transmitter assembly 810 is configured to generate one or more modulated optical signals and to provide the one or more modulated optical signals via the optical fiber 820.

The second transceiver 805B comprises a receiver assembly 815. In various embodiments, the receiver assembly 815 includes one or more photodiodes, photodetectors, and/or other optical signal detecting devices. In various embodiments, the optical signal detecting components of the receiver assembly 815 are configured to each receive a respective modulated optical signal and convert the respective modulated optical signal into an electrical signal encoding the digital data that was encoded into the modulated optical signal.

In certain embodiments, the first transceiver 805A comprises a WDM source configured to generate a plurality of modulated optical signals to provide a WDM optical signal having, possibly, multiple channels of data encoded therein. The WDM optical signal is then provided to the second transceiver 805B via the optical fiber 820, for example. One or more optical signal detecting components that may include respective photodiodes and/or other photodetectors may receive and/or detect respective portions of the WDM optical signal (e.g., corresponding to respective modulated optical signals) such that information is communicated from the first transceiver 805A to the second transceiver 805B via the optical signal(s).

### Example Datacenter

In various embodiments, a system includes one or more TW-EAMs, in accordance with various embodiments. For example, a transmitter assembly including one or more TW-EAMs 100 may be incorporated into a transceiver of an optical interconnect or link. For example, a transmitter assembly 700, 810 may include a WDM source comprising one or more TW-EAMs 100 of various embodiments and may be incorporated into an optical interconnect. Such an optical interconnect may be part of a datacenter.

For example, an optical interconnect comprising TW-EAMs 100 of various embodiments may be used to place various components of a datacenter in communication with one another. In various embodiments, the system may include a pluggable optical interconnect, a chip-to-chip, board-to-board, intra rack servers, rack-to-rack optical interconnect, an optical network comprising a plurality of optical interconnect, dense Wavelength Division Multiplexing (WDM) optical links, WDM or DWDM source and/or the like that includes one or more WDM sources comprising one or more EMLs of various embodiments as well as for AI fabrics and full range of different kinds of automative vehicles. For example, a WDM source may be configured to generate optical signals that are transmitted along one or more optical communication paths between two components of a datacenter, in accordance with an example embodiment.

Datacenters may include multiple network switches in a particular topology, such as a fat tree topology, a slim fly topology, a dragonfly topology, and/or the like. The specifications and makeup of the network switches in the topology affects the overall network performance (e.g., bandwidth capability) of the datacenter.

Datacenters are the storage and data processing hubs of the internet. The massive deployment of cloud applications is causing datacenters to expand exponentially in size, stimulating the development of faster switches than can cope with the increasing data traffic inside the datacenter. Current state-of-the-art switches are capable of handling 12.8 Tb/s of traffic by employing electrical switches in the form of application specific integrated circuits (ASICs) equipped with 256 data lanes, each operating at 50 Gbps. Such switching ASICs typically consume as much as 400 W, and the power consumption of the optical transceiver interfaces attached to each ASIC is comparable. To keep pace with traffic demand, switch capacity doubles approximately every two years. To date, this rapid scaling has been made possible by exploiting advances in manufacturing (e.g., CMOS techniques), collectively described by Moore's law (i.e., the observation that the number of transistors in a dense integrated circuit doubles about every two years). However, in recent years there are strong indications of Moore's law slowing down, which raises concerns about the capability to sustain the target scaling rate of switch capacity. As a result, alternative technologies are being investigated.

Figure 9 illustrates a system 900 according to at least one example embodiment. The system 900 includes a datacenter 904, a communication network 908, and one or more network devices 912. In at least one example embodiment, the datacenter 904 corresponds to a collection of network devices, such as network switches (e.g., Ethernet switches) connected with a collection of servers or compute nodes. The datacenter 904 may adhere to a networking topology (e.g., a hierarchal networking topology), such as a fat tree topology, a Slim Fly topology, a Dragonfly topology, and/or the like. The datacenter 904 routes traffic amongst the network switches and servers therein, and at least one layer of the topology in the datacenter 904 is coupled to the communication network 908 to allow networking traffic to flow between the datacenter 904 and the network device(s) 912.

Examples of the communication network 908 that may be used to connect the datacenter 904 and the network device(s) 912 include an Internet Protocol (IP) network, an Ethernet network, an InfiniBand (TB) network, a Fibre Channel network, the Internet, a cellular communication network, a wireless communication network, combinations thereof (e.g., Fibre Channel over Ethernet), variants thereof, and/or the like.

The one or more network devices 912 may include switch, router, or Network Interface Controller (NIC), interconnect using ports, one or more of Personal Computer (PC), a laptop, a tablet, a smartphone, a server, a collection of servers, and/or any suitable computing device for sending and receiving signals over the communication network 908. In at least one example embodiment, the one or more network devices 912 correspond to another datacenter, similar to or the same as datacenter 904.

As noted above, the datacenter 904 and/or the network device(s) 912 may include storage devices and/or processing circuitry for carrying out computing tasks, for example, tasks associated with controlling the flow of data internally and/or over the communication network 908. Such processing circuitry may comprise software, hardware, or a combination thereof. For example, the processing circuitry may include a memory including executable instructions and a processor (e.g., a microprocessor) that executes the instructions on the memory. The memory may correspond to any suitable type of memory device or collection of memory devices configured to store instructions. Non-limiting examples of suitable memory devices that may be used include Flash memory, Random Access Memory (RAM), Read Only Memory (ROM), variants thereof, combinations thereof, or the like. In some embodiments, the memory and processor may be integrated into a common device (e.g., a microprocessor may include integrated memory).

Additionally or alternatively, the processing circuitry may comprise hardware, such as an application specific integrated circuit (ASIC). For example, the processor may be or include one or more of an Integrated Circuit (IC) chip, a microprocessor, a Central Processing Unit (CPU), a Graphics Processing Unit (GPU), a Data Processing Unit (DPU), a Field Programmable Gate Array (FPGA), a network interface controller (NIC), an ASIC, combinations thereof, and the like. The processing circuitry may comprise an ASIC and/or may be capable of performing as a central processing unit (CPU), a graphics processing unit (GPU), a network interface controller (NIC), a data processing unit (DPU), or any other computing device in which with data is received and/or transmitted.

Some or all of the processing circuitry may be provided on a Printed Circuit Board (PCB) or collection of PCBs. It should be appreciated that any appropriate type of electrical component or collection of electrical components may be suitable for inclusion in the processing circuitry.

In addition, although not explicitly shown, it should be appreciated that the datacenter 904 and network device(s) 912 may include one or more communication interfaces for facilitating wired and/or wireless communication between one another and other unillustrated elements of the system 900.

In related art systems, a fat tree topology may use the same electrical switching devices on all layers (edge, aggregation, core). For example, each switching device may be 1 U switch, where 1 U refers to the industry standard size for rack-mounted switch and/or server. The interconnection between switches of different layers may be accomplished with optical links or optical interconnects using active optical cables and optical transceivers implemented in a pluggable form factor (also referred to as "pluggables").

Optical Datacenter Networks rely on allocation and deallocation of light paths from the data sources to the destinations end-ports to guarantee no light collisions and data loss occur in the fabric. Traditionally the allocation algorithms are run from a central entity which considers the entire demand for source and destination flows and try to find the most dense mapping of these demands to network resources over a single or multiple time periods.

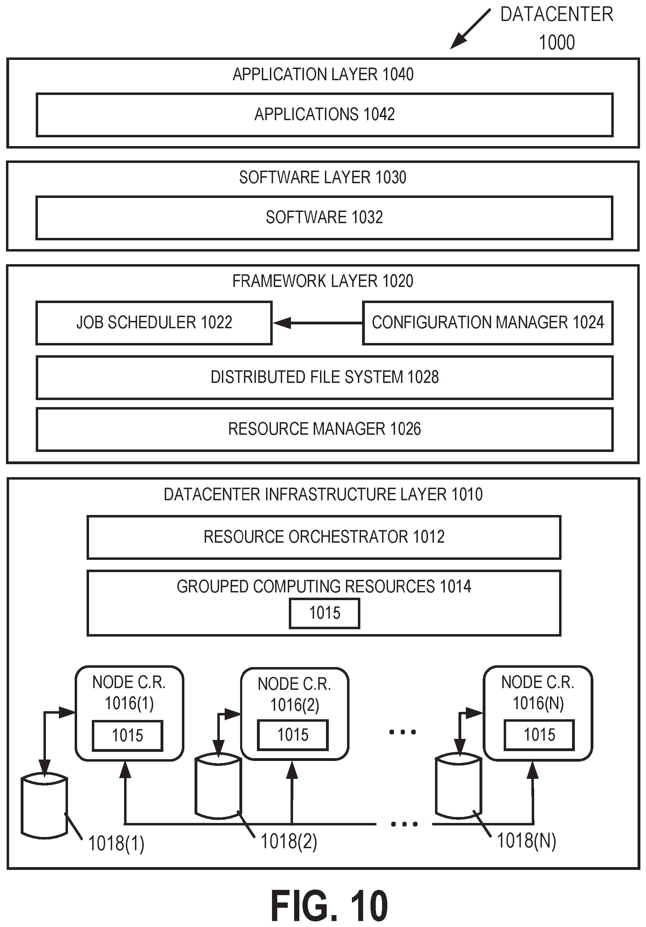

Figure 10 illustrates an example datacenter 1000, in which at least one embodiment may be used. In at least one embodiment, datacenter 1000 includes a datacenter infrastructure layer 1010, a framework layer 1020, a software layer 1030, and an application layer 1040.

In at least one embodiment, as shown in Figure 10, datacenter infrastructure layer 1010 may include a resource orchestrator 1012, grouped computing resources 1014, and node computing resources ("node C.R.s") 1016(1)-1016(N), where "N" represents a positive integer (which may be a different integer "N" than used in other figures). In at least one embodiment, node C.R.s 1016(1)-1016(N) may include, but are not limited to, any number of central processing units ("CPUs") or other processors (including accelerators, field programmable gate arrays (FPGAs), graphics processors, etc.), memory storage devices 1018(1)-1018(N) (e.g., dynamic read-only memory, solid state storage or disk drives), network input/output ("NW I/O") devices, network switches, virtual machines ("VMs"), power modules, and cooling modules, etc. In at least one embodiment, one or more node C.R.s from among node C.R.s 1016(1)-1016(N) may be a server having one or more of above-mentioned computing resources.

In at least one embodiment, grouped computing resources 1014 may include separate groupings of node C.R.s housed within one or more racks (not shown), or many racks housed in datacenters at various geographical locations (also not shown). In at least one embodiment, separate groupings of node C.R.s within grouped computing resources 1014 may include grouped compute, network, memory, or storage resources that may be configured or allocated to support one or more workloads. In at least one embodiment, several node C.R.s including CPUs or processors may grouped within one or more racks to provide compute resources to support one or more workloads. In at least one embodiment, one or more racks may also include any number of power modules, cooling modules, and network switches, in any combination.

In at least one embodiment, resource orchestrator 1012 may configure or otherwise control one or more node C.R.s 1016(1)-1016(N) and/or grouped computing resources 1014. In at least one embodiment, resource orchestrator 1012 may include a software design infrastructure ("SDI") management entity for datacenter 1000. In at least one embodiment, resource orchestrator 1012 may include hardware, software or some combination thereof.

In at least one embodiment, as shown in Figure 10, framework layer 1020 includes a job scheduler 1022, a configuration manager 1024, a resource manager 1026 and a distributed file system 1028. In at least one embodiment, framework layer 1020 may include a framework to support software 1032 of software layer 1030 and/or one or more application(s) 1042 of application layer 1040. In at least one embodiment, software 1032 or application(s) 1042 may respectively include web-based service software or applications, such as those provided by Amazon Web Services, Google Cloud and Microsoft Azure. In at least one embodiment, framework layer 1020 may be, but is not limited to, a type of free and open-source software web application framework such as Apache Spark^{™} (hereinafter "Spark") that may utilize distributed file system 1028 for large-scale data processing (e.g., "big data"). In at least one embodiment, job scheduler 1022 may include a Spark driver to facilitate scheduling of workloads supported by various layers of datacenter 1000. In at least one embodiment, configuration manager 1024 may be capable of configuring different layers such as software layer 1030 and framework layer 1020 including Spark and distributed file system 1028 for supporting large-scale data processing. In at least one embodiment, resource manager 1026 may be capable of managing clustered or grouped computing resources mapped to or allocated for support of distributed file system 1028 and job scheduler 1022. In at least one embodiment, clustered or grouped computing resources may include grouped computing resources 1014 at datacenter infrastructure layer 1010. In at least one embodiment, resource manager 1026 may coordinate with resource orchestrator 1012 to manage these mapped or allocated computing resources.

In at least one embodiment, software 1032 included in software layer 1030 may include software used by at least portions of node C.R.s 1016(1)-1016(N), grouped computing resources 1014, and/or distributed file system 1028 of framework layer 1020. In at least one embodiment, one or more types of software may include, but are not limited to, Internet web page search software, e-mail virus scan software, database software, and streaming video content software.

In at least one embodiment, application(s) 1042 included in application layer 1040 may include one or more types of applications used by at least portions of node C.R.s 1016(1)-1016(N), grouped computing resources 1014, and/or distributed file system 1028 of framework layer 1020. In at least one embodiment, one or more types of applications may include, but are not limited to, any number of a genomics application, a cognitive compute, application and a machine learning application, including training or inferencing software, machine learning framework software (e.g., PyTorch, TensorFlow, Caffe, etc.) or other machine learning applications used in conjunction with one or more embodiments.

In at least one embodiment, any of configuration manager 1024, resource manager 1026, and resource orchestrator 1012 may implement any number and type of self-modifying actions based on any amount and type of data acquired in any technically feasible fashion. In at least one embodiment, self-modifying actions may relieve a datacenter operator of datacenter 1000 from making possibly bad configuration decisions and possibly avoiding underutilized and/or poor performing portions of a datacenter.

In at least one embodiment, datacenter 1000 may include tools, services, software, or other resources to train one or more machine learning models or predict or infer information using one or more machine learning models according to one or more embodiments described herein. For example, in at least one embodiment, a machine learning model may be trained by calculating weight parameters according to a neural network architecture using software and computing resources described above with respect to datacenter 1000. In at least one embodiment, trained machine learning models corresponding to one or more neural networks may be used to infer or predict information using resources described above with respect to datacenter 1000 by using weight parameters calculated through one or more training techniques described herein.

In at least one embodiment, datacenter may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

Inference and/or training logic 1015 are used to perform inferencing and/or training operations associated with one or more embodiments. In at least one embodiment, inference, and/or training logic 1015 may be used in system Figure 10 for inferencing or predicting operations based, at least in part, on weight parameters calculated using neural network training operations, neural network functions and/or architectures, or neural network use cases described herein.

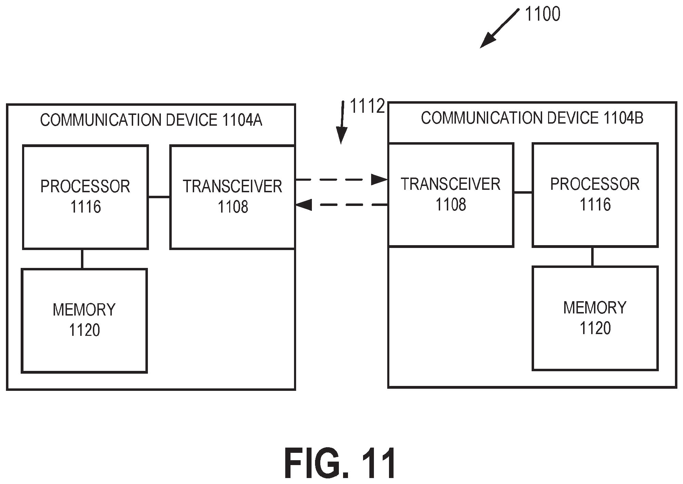

Figure 11 illustrates a system 1100 including a first communication device 1104A and a second communication device 1104B. Illustratively, but without limitation, the communication devices 1104 (e.g., 1104A, 1104B) may correspond to network devices (e.g., network devices 812). As such, the communication devices 1104 may correspond to any type of device that becomes part of or is connected with a communication network (e.g., communication network 808). Examples of suitable devices that may act or operate like a communication device 1104 as described herein include, without limitation, one or more of a Personal Computer (PC), a laptop, a tablet, a smartphone, a server, a collection of servers, a networking card, an edge router, a switch, Network Interface Controller, a Top of Rack (ToR) switch, a server blade, or the like. The communication device 1104 may include a transceiver 1108, a processor 1116, and memory 1120. The transceiver 1108 may include hardware that enables communications over the communication channel 1112 whereas the processor 1116 and memory 1120 may include components that enable the communication device 1104 to provide a desired functionality or perform certain functions.

The communication channel 1112 may traverse a datacenter or any type of communication network (whether trusted or untrusted). Examples of a communication network that may be used to connect communication devices 1104 and support the communication channel 1112 include, without limitation, an Internet Protocol (IP) network, an Ethernet network, an InfiniBand (IB) network, a Fibre Channel network, the Internet, a cellular communication network, a wireless communication network, combinations thereof (e.g., Fibre Channel over Ethernet), variants thereof, and/or the like. In one specific, but non-limiting example, the communication network enables data transmission between the communication devices 1104 using optical signals. In this case, the communication devices 1104 and the communication network may include waveguides (e.g., optical fibers) that carry the optical signals. For example, the communication devices and/or the communication network may include one or more WDM sources comprising short cavity GaAs-based EMLs of various embodiments, according to various embodiments.

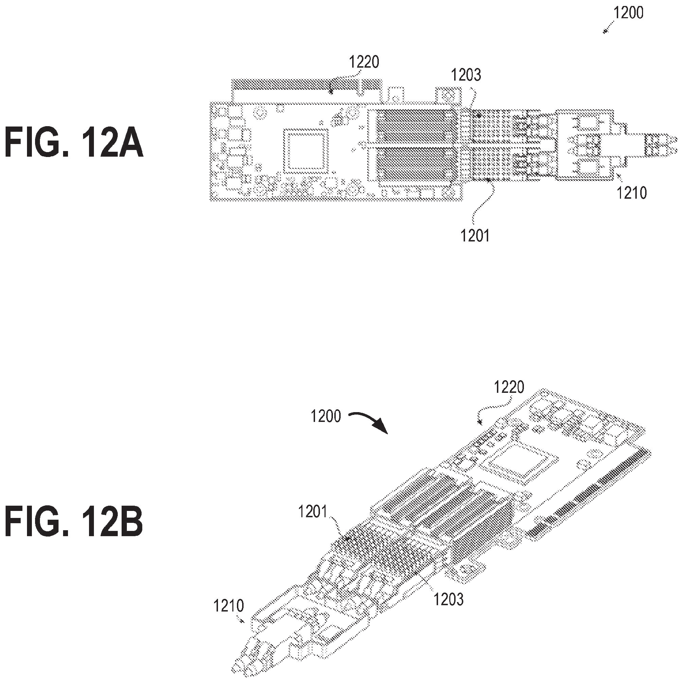

Figures 12A and 12B illustrate a top view and a perspective view, respectively, of a transceiver module operatively coupled to a network adapter, in the present example a Network Interface Controller (NIC) 1200, in accordance with an embodiment of the disclosure. As shown in FIGS. 12A and 12B, the transceiver module may include a first optical module 1201, a second optical module 1203, an adapter 1210, and a dual-port NIC 1220 of a server. Both the first optical module 1201 and the second optical module 1203 may be dual-fiber transceivers that are configured for duplex communication that allows the source (e.g., server) to communicate with the target (e.g., leaf switch) in both directions. The adapter 1210 may be a ganged physical component configured to link the first optical module 1201 and the second optical module 1203 for the purpose of transmitting and receiving data to and from the leaf switch.

In some embodiments, the adapter 1210 may be configured to operate in two configurations, such as a first configuration and a second configuration. In one aspect, the first configuration may be a default configuration of operation, where the first optical module 1201 may be operationally active. The second configuration may be a contingent configuration that is implemented when the first optical module 1201 operationally fails. When such a failure is detected, the second optical module 1203, which is otherwise operationally inactive or idle, may be engaged become operationally active and handle all network traffic that was initially handled by the first optical module 1201.

In some embodiments, the transceiver module 1200 may be configured to operate in a leaf-spine architecture. A leaf-spine architecture is a data center network topology that may include two switching layers-a spine layer and a leaf layer. The leaf layer may include access switches (leaf switches) that aggregate traffic from servers and connect directly into the spine or network core. Spine switches interconnect all leaf switches in a full-mesh topology between access switches in the leaf layer and the servers from which the access switches aggregate traffic. As such, in one embodiment, to ensure reliable operation of downlinks, the transceiver module 1200 may be configured to operate between the server and the leaf layer. In particular, as shown in FIGS. 12A and 12B, the adapter 1210 may be operatively coupled to the first optical module 1201 and the second optical module 1203, while the first optical module 1201 and the second optical module 1203 may be operatively coupled to a dual-port NIC 1220 of a server.

In embodiments, NIC 1200 may comprise one or more processing circuits, as detailed above; the processing circuits may comprise FW, that is loaded according to the techniques described above.

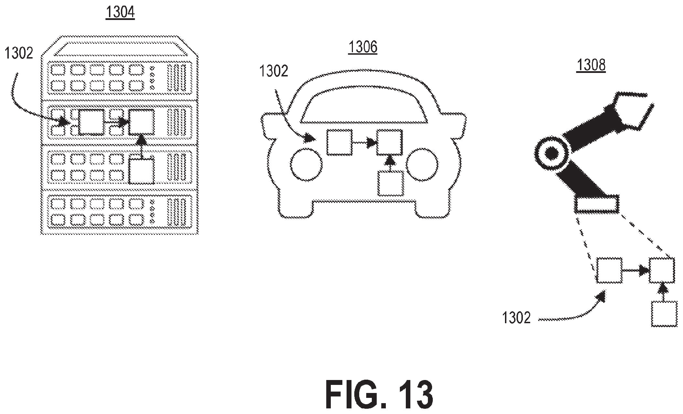

Figure 13 depicts some exemplary scenarios for use of an optical transceiver 1302 in accordance with some embodiments. An optical transceiver 1302 may be utilized in a computing system 1304 (e.g., in a server farm, or within a server computer system), a vehicle 1306 (e.g., a car, truck, train, or airplane), and a robot 1308 (or among robots in a factory), to name just a few examples. The optical transceiver 1302 may be particularly useful for high-speed communication in environments subject to high levels of electromagnetic interference (EMI).

### Example System Use Case

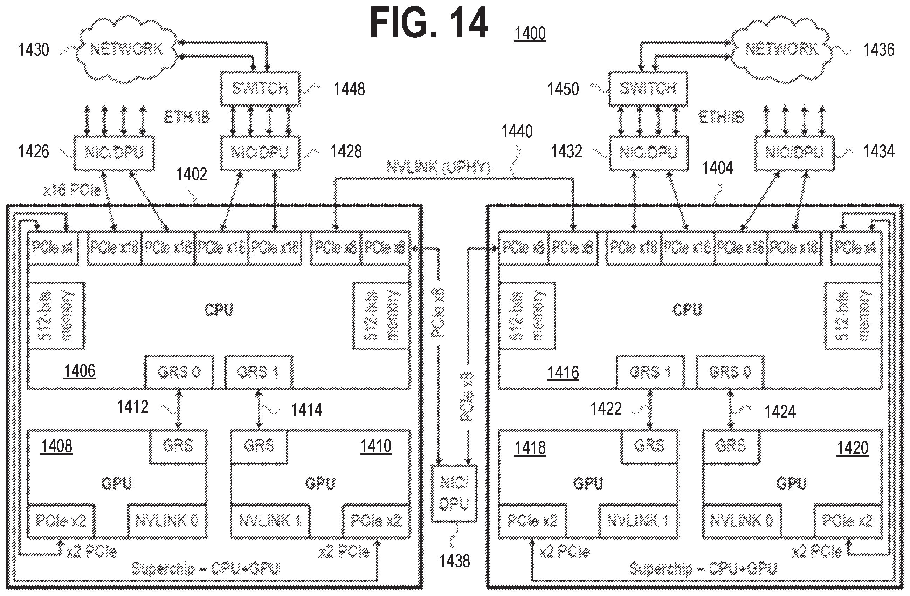

Figure 14 is a block diagram that schematically illustrates a computing system 1400, e.g., a data center or a High-Performance Computing (HPC) cluster, in accordance with an embodiment that is described herein. System 1400 comprises a plurality of subsystems, e.g., multiple processing devices coupled to each other, multiple network devices, and multiple networks, according to at least one embodiment. Computing system 1400 is designed with multiple integrated circuits (referred to as processing devices), where each integrated circuit can include one or more CPUs and GPUs, forming a powerful and flexible architecture.

The various processing devices are interconnected via an NVLink or other high-speed interconnect, enabling high-speed communication between the subsystems, and are also connected through a NIC or DPU to ensure efficient data transfer across computing system 1400 and to one or more external networks 1430, 1436. In the present example, system 1400 comprises a packet switch 1448 that connects NIC/DPU 1428 to network 1430, and a packet switch 1450 that connects NIC/DPU 1432 to network 1436.

The coupling of processing devices through NVLink allows for seamless data exchange and parallel processing, enhancing overall computational performance. The processing devices are connected to multiple networks through one or more network interface controllers (NICs) or DPUs, enabling the system to handle complex, multi-network tasks with high bandwidth and low latency. This configuration is highly suitable for demanding applications that require significant processing power, such as artificial intelligence (AI), machine learning (ML), and data-intensive computing, while ensuring robust connectivity and scalability across various networked environments. The integrated circuits of the computing system 1400 can include one or more CPUs and one or more GPUs.

Figure 14 also demonstrates an example architecture of a multi-GPU architecture. As illustrated in the figure, computing system 1400 includes a processing device 1402 with a multi-GPU architecture. In particular, processing device 1402 may be a system-on-chip and includes multiple subsystems such as a CPU 1406, a GPU 1408, and a GPU 1410. CPU 1406 can be coupled to GPU 1408 via a die-to-die (D2D) or chip-to-chip (C2C) interconnect 1412, such as a Ground-Referenced Signaling interconnect (GRS interconnect). CPU 1406 can be coupled to GPU 1410 via a D2D or C2C interconnect 1414. CPU 1406 can also couple to GPU 1408 and GPU 1410 via PCIe interconnects.

CPU 1406 can be coupled to one or more NICs or DPUs, which are coupled to one or more networks. For example, as illustrated in Fig. 14, CPU 1406 is coupled to a first NIC/DPU 1426, which is coupled to a network 1430. CPU 1406 is also coupled to a second NIC/DPU 1428, which is coupled to network 1430 via switch 1448. NIC/DPU 1426 and NIC/DPU 1428 can be coupled to network 1430 over Ethernet (ETH), NVLINK or InfiniBand (IB) connections, for example.

Computing system 1400 also includes a processing device 1404 with a multi-GPU architecture. In particular, processing device 1404 includes multiple subsystems including a CPU 1416, a GPU 1418, and a GPU 1420. CPU 1416 can be coupled to GPU 1418 via an D2D or C2C interconnect 1422. CPU 1416 can be coupled to GPU 1420 via a D2D or C2C interconnect 1424. CPU 1416 can also couple to GPU 1418 and GPU 1420 via PCIe interconnects. CPU 1416 can be coupled to one or more NICs or DPUs, which are coupled to one or more networks. For example, as illustrated in Fig. 14, CPU 1416 is coupled to a first NIC/DPU 1432, which is coupled to a network 1436. CPU 1416 is also coupled to a second NIC/DPU 1434, which is coupled to network 1436 via switch 1450. NIC/DPU 1432 and NIC/DPU 1434 can be coupled to network 1436 over Ethernet (ETH), NVLINK or InfiniBand (IB) connections.

In at least one embodiment, processing device 1402 and processing device 1404 can communication with each other via a NIC/DPU 1438, such as over PCIe interconnects. Processing device 1402 and processing device 1404 can also communicate with each other over a high-bandwidth communication interconnects 1440, such as an NVLink interconnect or other high-speed interconnects. The packet switches in Fig. 14 may comprise, for example, Nvidia Quantum-2 switches. The NICs/DPUs in the figure may comprise, for example, Nvidia Bluefield DPUs.

In various embodiments, one or more of the interconnects 1412, 1414, 1422, 1424 may be optical interconnects disclosed herein. Additionally, in various embodiments, switches 1448, 1450 may be in communication with NIC/DPU 1428, 1432, respectively, via one or more optical interconnects disclosed herein. In some embodiments, NIC/DPU 1426, 1434 may be in communication with one or more additional elements via optical interconnects disclosed herein. For example, various elements of the computing system 1400 may be in communication with one another via one or more optical interconnects disclosed herein.

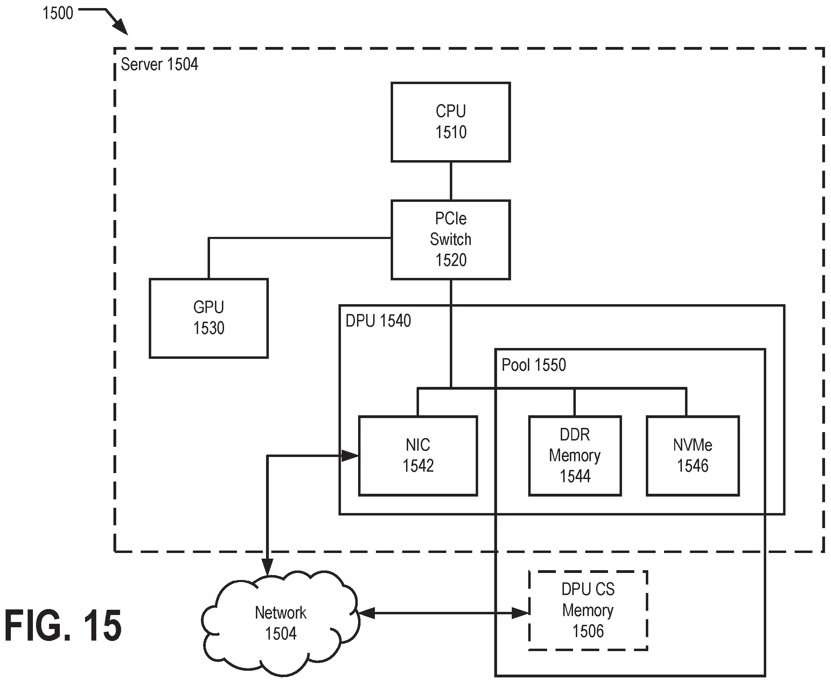

FIG. 15 illustrates an example computing environment 1500 in which forward pass offloading to available memory can be performed, in accordance with at least one embodiment. It should be appreciated that embodiments of the present disclosure may also be used with reference to alternative environments and that specific discussion of components may be provided by way of non-limiting example and may include equivalents. Moreover, various features have been removed for clarity and conciseness. Additionally, systems and methods may be used with a variety of different architectures. The example computing environment 1500 may include a server 1502 which may be used to perform high performance computing (HPC) workloads, such as AI training or machine learning model training. In an embodiment, the server 1502 may be an application instance or a compute node. The server 1502 may include a CPU 1510 associated with a switch 1520, such as a peripheral component interconnect express (PCIe) switch, which may control at least some data transmission over communication paths interconnecting various components. In an embodiment, the CPU 1510 may include a root complex processor.

The PCIe switch 1520 may also be associated with a GPU 1530 and a DPU 1540, and may transmit data between at least some of the CPU 1510, the GPU 1530, the DPU 1540, and other components (e.g., via one or more optical interconnects disclosed herein). In an embodiment, the PCIe switch 1520 may be associated with more than one GPU or more than one DPU. In another embodiment, the PCIe switch 1520 may be located within the DPU 1540. The PCIe switch 1520 may manage the transfer of at least some data between the CPU 1510, the GPU 1530, and the DPU 1540. In another embodiment, the number of GPUs associated with the PCIe switch 1520 may be equal to the number of DPUs associated with the PCIe switch 1520. In at least one embodiment, the server 1502 may include, without limitation, any number of the CPUs 1510, the PCIe switches 1520, the GPUs 1530, and/or the DPUs 1540, in any combination. For example, in at least one embodiment, server 1502 could include eight, sixteen, thirty-two, and/or more GPUs 1530. In at least one embodiment, communication paths interconnecting various components, including but not limited to the CPU 1510, the PCIe switch 1520, the GPU 1530, and the DPU 1540, in FIG. 15 may be implemented using any suitable protocols, such as peripheral component interconnect (PCI) based protocols (e.g., PCIe), or other bus or point-to-point communication interfaces and/or protocol(s), such as NV-Link high-speed interconnect, or interconnect protocols.

The DPU 1540 may include a network interface controller (NIC) 1542, a DDR memory 1544, and a non-volatile memory express (NVMe) device 1546. The NIC 1542 may be able to interface with a network 1504, which may also interface with additional NVMe devices available to the DPU 1540, such as over fabric. In an embodiment, the DPU 1540 may not include the NVMe device 1546. In another embodiment, the NVMe device 1546 may be located on the server 1502 and not on the DPU 1540. In yet another embodiment, the computing environment 1500 may include more than one of the NVMe device 1546, such as a first NVMe device in the DPU 1540 and a second first NVMe device on the server 1502 an associated directly with the PCIe switch 1520. In an embodiment, the DPU 1540 may not include the DDR memory 1544 and may include a computational storage services (CSS) in place of, or in addition to, the DDR memory 1544. For example, computing environment 1500 may include DPU computational storage (CS) memory 1506 available to the DPU 1540 as part of the CSS. The network 1504 may be able to interface with the DPU CS memory 1506 through the NIC 1542, according to any suitable interface protocol, such as remote direct memory access (RDMA) over Ethernet, InfiniBand, Fiber Channel, etc.

The total memory of the computing environment 1500 available for data storage may be expanded through the use of the DPU 1540 on nodes of the system. The DPU 1540 may have access to a pool 1550 of memory already available to the server 1502, such as double data rate (DDR) memory, on-board NVMe devices, NVMe devices over fabric, and CS. The pool 1550 of memory may include at least one of the DDR memory 1544, NVMe 1546, and the DPU CS memory 1506. The DPU 1540 may also be able to access the available memory of other DPUs as part of the pool 1550, and other DPUs may be able to access the available memory of DPU 1540, such as the pool 1550 . This available memory can be accessed and utilized for data storage, without the addition of compute resources, such as compute nodes, which would be required using other solutions. The available pool 1550 accessible to the DPU 1540 may be provisioned for the server 1502 to expand the total memory available for data storage, such as to reduce the data storage load on the CPU 1510 or the GPU 1530, which can instead increase the utilization of their memory for processing. For example, during training of an AI, the model states, residual states, activation functions, and checkpoints can be stored, or offloaded, on the pool 1550 accessible to the DPU 1540.

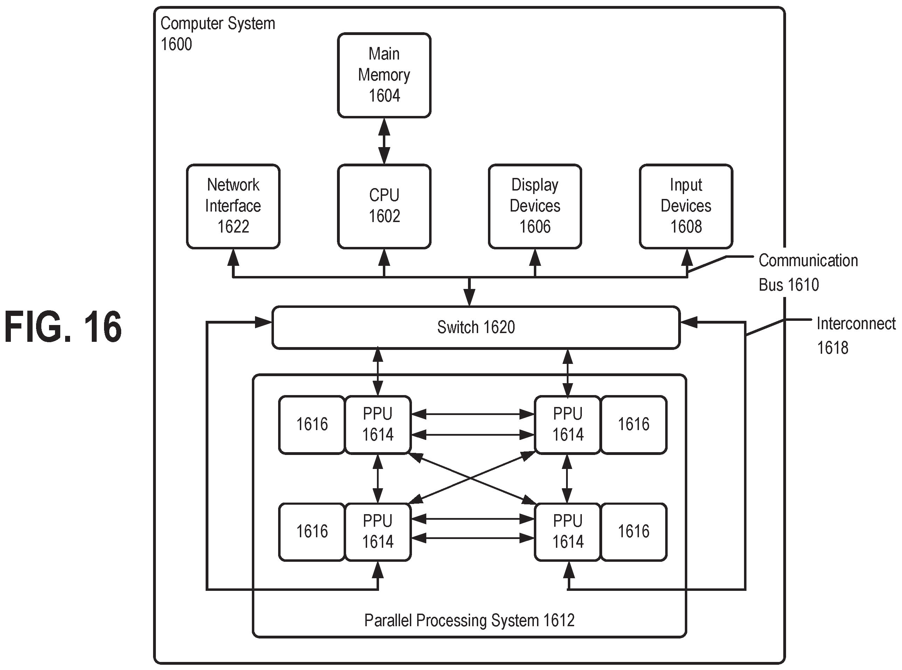

FIG. 16 illustrates a computer system 1600, according to at least one embodiment. In at least one embodiment, computer system 1600 comprises at least one optical interconnect of an example embodiment.

In at least one embodiment, computer system 1600 comprises, without limitation, at least one central processing unit ("CPU") 1602 that is connected to a communication bus 1610 implemented using any suitable protocol, such as PCI ("Peripheral Component Interconnect"), peripheral component interconnect express ("PCI-Express"), AGP ("Accelerated Graphics Port"), HyperTransport, or any other bus or point-to-point communication protocol(s). In at least one embodiment, computer system 1600 includes, without limitation, a main memory 1604 and control logic (e.g., implemented as hardware, software, or a combination thereof) and data are stored in main memory 1604 which may take form of random access memory ("RAM"). In at least one embodiment, a network interface subsystem ("network interface") 1622 provides an interface to other computing devices and networks for receiving data from and transmitting data to other systems from computer system 1600.

In at least one embodiment, computer system 1600, in at least one embodiment, includes, without limitation, input devices 1608, parallel processing system 1612, and display devices 1606 which can be implemented using a conventional cathode ray tube ("CRT"), liquid crystal display ("LCD"), light emitting diode ("LED"), plasma display, or other suitable display technologies. In at least one embodiment, user input is received from input devices 1608 such as keyboard, mouse, touchpad, microphone, and more. In at least one embodiment, each of foregoing modules can be situated on a single semiconductor platform to form a processing system.

In at least one embodiment, computer programs in form of machine-readable executable code or computer control logic algorithms are stored in main memory 1604 and/or secondary storage. Computer programs, if executed by one or more processors, enable system 1600 to perform various functions in accordance with at least one embodiment, memory 1604, storage, and/or any other storage are possible examples of computer-readable media. In at least one embodiment, secondary storage may refer to any suitable storage device or system such as a hard disk drive and/or a removable storage drive, representing a floppy disk drive, a magnetic tape drive, a compact disk drive, digital versatile disk ("DVD") drive, recording device, universal serial bus ("USB") flash memory, etc. In at least one embodiment, architecture and/or functionality of various previous figures are implemented in context of CPU 1602; parallel processing system 1612; an integrated circuit capable of at least a portion of capabilities of both CPU 1602; parallel processing system 1612; a chipset (e.g., a group of integrated circuits designed to work and sold as a unit for performing related functions, etc.); and any suitable combination of integrated circuit(s).

In at least one embodiment, architecture and/or functionality of various previous figures are implemented in context of a general computer system, a circuit board system, a game console system dedicated for entertainment purposes, an application-specific system, and more. In at least one embodiment, computer system 1600 may take form of a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, a mobile phone device, a television, workstation, game consoles, embedded system, and/or any other type of logic.

In at least one embodiment, parallel processing system 1612 includes, without limitation, a plurality of parallel processing units ("PPUs") 1614 and associated memories 1616. In at least one embodiment, PPUs 1614 are connected to a host processor or other peripheral devices via an interconnect 1618 and a switch 1620 or multiplexer. In at least one embodiment, parallel processing system 1612 distributes computational tasks across PPUs 1614 which can be parallelizable-for example, as part of distribution of computational tasks across multiple graphics processing unit ("GPU") thread blocks. In at least one embodiment, memory is shared and accessible (e.g., for read and/or write access) across some or all of PPUs 1614, although such shared memory may incur performance penalties relative to use of local memory and registers resident to a PPU 1614. In at least one embodiment, operation of PPUs 1614 is synchronized through use of a command such as_syncthreads( ), wherein all threads in a block (e.g., executed across multiple PPUs 1614) to reach a certain point of execution of code before proceeding.

The PPUs 1614 may be in communication with one another and/or switch 1620 via one or more optical interconnects in accordance with example embodiments disclosed herein.

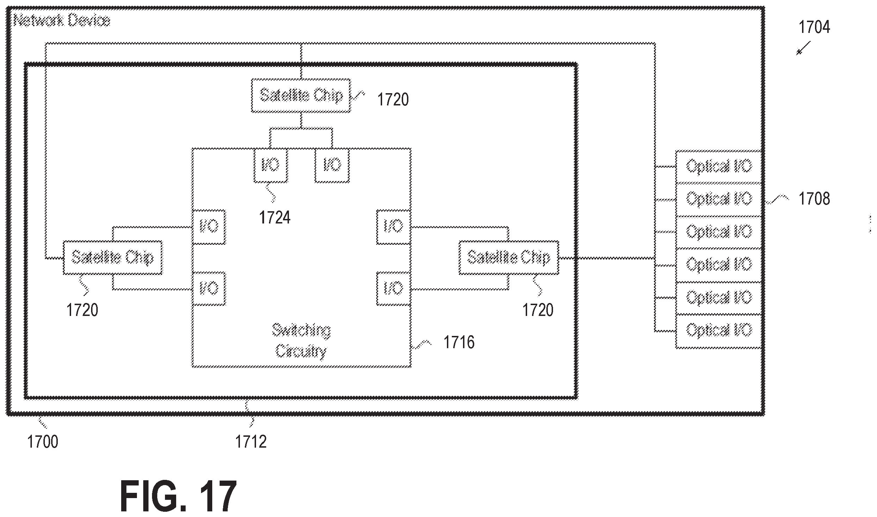

Co-packaging may refer to the close integration of different electrical and/or optoelectronic chips in the same package. Fig. 17 is a block diagram that schematically illustrates a co-packaged Networking Device 1700, in accordance with an embodiment that is disclosed herein. The different chips that constitute a co-packaged Networking Device are assembled on a single substrate in what is typically called the MCM assembly 1712. The MCM assembly 1712 can include a switching circuitry 1716 surrounded by peripheral or satellite chips 1720. In some embodiments, the switching circuitry 1716 and surrounding satellite chips 1720 are all mounted on a common substrate, although such a configuration is not required. The MCM assembly 1712 may be provided in a larger housing of the networking device 1700, positioned behind the front panel 1704. The switching circuitry 1716 may include one or more core digital Application Specific Integrated Circuits (ASICs), CPUs, GPUs, microprocessors, FPGAs, combinations thereof, and the like. The switching circuitry 1716 may include a number of input ports and/or output ports 1728. The Input/Output (I/O) ports 1724 may include electrical ports and/or optical ports. Additionally, the switching circuitry 1716 may include a combination of electrical blocks and optical blocks. The electrical blocks of the switching circuitry 1716 may include a number of electrical switches that are configured to route signals in an electrical domain. The optical blocks of the switching circuitry 1716 may include a number of optical components that are configured to generate, detect, and route signals in an optical domain. The MCM assembly 1712, in some embodiments, may concern or include multiple satellite chips 1720 that are assembled on the same substrate as the switching circuitry 1716. In some embodiments, a configuration of the optical block(s) and a configuration of the electrical block(s) depends (e.g., is based on) on the number of optical ports in the I/O ports 1724.

As discussed above, optical I/Os 1708, which may also be referred to as optical connectors, are placed at the front panel 1704. As mentioned above, connectivity between the MCM assembly 1712 and optical I/Os 1708 may be transferred to the front panel 1704 through optical fibers. This connection may be made directly with an optical I/O 1724 of the switching circuitry or may be made with one or more of the satellite chips 1720. The connection is often made with one or more of the satellite chips 1720 because the satellite chips 1720 may include the electro-optic converters and, possibly, the serializer/deserializer (SERDES) to natively support the connection. The satellite chips 1720 may include one or more of aDSP processor, driver, trans-impedance amplifier, laser, modulator, photodiode, serializer-deserializer, or the like.

Some embodiments of the present disclosure are directed to a multi-chip module (MCM) with a centrally positioned main die and a plurality of peripherally positioned MCM sockets configured to mechanically receive and electrically connect mezzanine packages, which may include co-packaged optics (CPO) packages and co-packaged copper (CPC) packages. Each mezzanine package may include a package substrate including a connector portion that is configured to engage the MCM socket and a main portion extending beyond the periphery of the MCM substrate. The main portion of the mezzanine package may be configured to receive optical devices and/or integrated circuits, such as via mezzanine sockets, to allow connections to be made between the optical devices and/or integrated circuits/RF copper cable connectors and the main die of the MCM. Due to the extension of the mezzanine package beyond the periphery of the MCM substrate, the physical size of the MCM substrate may remain small to reduce cost and avoid the previously discussed production challenges, while allowing connections to a number of optical devices and integrated circuits via the mezzanine packages, which occupy the relatively inexpensive space around the periphery of the MCM substrate. As used herein, the terms "co-packaged optic" (or "CPO") and "co-packaged copper" (or "CPC") may refer to an advanced heterogeneous integration of either optics and silicon or copper and silicon, in which either integration may be implemented on a single packaged substrate. The CPO may utilize pluggable optical modules that include an optical engine (OE) to convert optical signals to electrical signals and electrical signals to optical signals. The CPO may further be comprised of an optical component on a photonics die and an electrical component on an electrical die.

As used herein, a ball grid array (BGA) may be a type of surface-mount packaging used for integrated circuits. BGA packages use an array of metallic conductor balls arranged in a grid to permanently mount devices such as microprocessors on a PCB. The metallic conductor balls may then undergo the reflow process described above, wherein the metallic conductor balls may be preheated, then melted to bond the IC to a substrate to form an IC package.

As used herein, the term "flip-chip (FC)" may refer to a method for interconnecting dies, such as semiconductor devices, IC chips, integrated passive devices, and microelectromechanical systems (MEMS), to external circuitry with solder bumps that have been deposited onto chip pads. The solder bumps may be deposited onto chip pads on the top side of the wafer during final wafer processing. The chip may be mounted to external circuitry (such as a circuit board or another chip or wafer) by "flipping" the chip, such that the chip's top side faces down and is positioned to allow the pads of the chip to align with matching pads on the external circuit. Solder is reflowed to complete the interconnect.

### Conclusion

Many modifications and other embodiments will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A traveling wave electro-absorption modulator (TW-EAM) comprising:
a plurality of active segments separated by inactive waveguide segments, wherein each active segment of the plurality of active segments has a ridge structure comprising:
an n-type cladding layer disposed on a substrate;
a core layer disposed on the n-type cladding layer and comprising a core material;
a p-type cladding layer disposed on the core layer; and
a p-type ridge comprising a ridge-cladding layer and a ridge contact layer, wherein the ridge-cladding layer comprises a ridge-cladding material, the ridge-cladding material is **characterized by** a higher bandgap than the core material, the ridge contact layer comprises a contact material, and the contact material is **characterized by** a lower bandgap than the core material,
wherein the ridge contact layer has a thickness of at least 0.5 micron.

2. The TW-EAM of claim 1, wherein the core layer comprises a multi-quantum well (MQW) stack **characterized by** a lower bandgap than respective bandgaps that characterize the n-type cladding layer and the p-type cladding layer and the MQW stack is configured to perform optical modulation at least in part via the quantum-confined Stark effect (QCSE).

3. The TW-EAM of claim 1 or 2, wherein a longitudinal length of each segment of the plurality of active segments is smaller than 40 microns for enabling of a modulation bandwidth of greater than 100GHz, further comprising:
a plurality of active segment contacts, each active segment contact of the plurality of active segment contacts in electrical communication with a respective segment of the plurality of active segments via the respective ridge contact layer; and
a transmission line configured to provide modulator driving signals to the plurality of active segment contacts, wherein a termination resistance of the transmission line is in a range of 30 to 45 ohms.

4. The TW-EAM of claim 1, 2, or 3, wherein the ridge-cladding layer has a thickness smaller than 1.2 microns.

5. The TW-EAM of any of claims 1-4, wherein the ridge-cladding layer has a substantially uniformly doped with a p-type dopant and is **characterized by** a p doping level larger than 4E17 cm⁻³.

6. The TW-EAM of any of claims 1-4, wherein the ridge-cladding layer has a varying doping profile with an average doping level is larger than 4E17 cm⁻³.

7. The TW-EAM of any of claims 1-6, wherein the n-type cladding layer, the p-type cladding layer, and the ridge-cladding layer each comprise a respective InP material and the ridge contact layer comprises a lattice matched InGaAs material.

8. The TW-EAM of any of claims 1-7, wherein the ridge-cladding layer is **characterized by** an average p doping level larger than 1E18 cm⁻³ to enable a modulation bandwidth greater than 120GHz.

9. The TW-EAM of any of claims 1-8, wherein the thickness of the ridge contact layer is in range of 0.5 to 2.5 microns and a thickness of the ridge-cladding layer is in a range of 0.5 to 1.2 microns.

10. The TW-EAM of any of claims 1-9, wherein the plurality of active segments consists of two to five segments.

11. A traveling wave electro-absorption modulator (TW-EAM) comprising:
a ridge structure comprising:
a core layer;
a p-type cladding layer disposed on the core layer;
a p-type ridge layer disposed on the p-cladding layer; and
a ridge contact layer disposed on the p-type ridge layer,
wherein the ridge contact layer has a thickness of at least 0.5 micron.

12. A transmitter assembly comprising:
an optical signal source optically coupled to a TW-EAM modulator; and
the TW-EAM modulator, wherein the TW-EAM modulator comprises:
a plurality of active segments separated by inactive waveguide segments, wherein each active segment of the plurality of active segments has a ridge structure comprising:
an n-type cladding layer disposed on a substrate;
a core layer disposed on the n-type cladding layer and comprising a core material;
a p-type cladding layer disposed on the core layer; and
a p-type ridge comprising a ridge-cladding layer and a ridge contact layer, wherein the ridge-cladding layer comprises a ridge-cladding material, the ridge-cladding material is **characterized by** a higher bandgap than the core material, the ridge contact layer comprises a contact material, and the contact material is **characterized by** a lower bandgap than the core material,
wherein the ridge contact layer has a thickness of at least 0.5 micron.

13. The transmitter assembly of claim 12, wherein the ridge-cladding layer has a thickness smaller than 1.2 microns and the ridge-cladding layer has one of:
a substantially uniform doping profile and is **characterized by** a p doping level larger than 4E17 cm⁻³, or
a varying doping profile having an average doping level is larger than 4E 17 cm⁻³.

14. An optical interconnect comprising the transmitter assembly of claim 12.

15. A datacenter comprising the optical interconnect of claim 14.
